# EUROPEAN PATENT APPLICATION

(11) **EP 2 093 186 A1**
(43) Date of publication of application: **26.08.2009**
(21) Application number: 07831415.0
(22) Date of filing: 08.11.2007
(51) Int. Cl.: C01B 3/38, H01M 8/06

(54) **REFORMER, REFORMING UNIT, AND FUEL CELL SYSTEM**

(30) Priority: 08.11.2006 JP 2006303227; 13.11.2006 JP 2006307078
(71) Applicant: Idemitsu Kosan Co., Ltd., Chiyoda-ku Tokyo 100-8321 (JP); Corona Corporation, Sanjo-shi Niigata 955-8510 (JP)
(72) Inventor: HIGASHINO, Kazuyuki, Sodegaura-shi Chiba 299-0293 (JP); KOMAZAWA, Akihiko, Chiba-shi Chiba 261-0023 (JP); WATANABE, Misao, Chiba-shi Chiba 261-0023 (JP); TOKITA, Yoshiji, Sanjo-shi Niigata 955-8510 (JP)
(74) Representative: HOFFMANN EITLE
(86) International application number: PCT/JP2007/071684
(87) International publication number: WO 2008/056724

(57) **Abstract**

A reformer includes: a reformer container (152) in which a reforming chamber (152C) having a substantially annular space filled with a reforming catalyst is defined; a heater disposed substantially on a center axis of the reformer container (152); and a circular portion (153) having a plurality of double-pipe structures (153C) each of which includes: a feed pipe (153A) connected to a first axial end of the reformer container (152) for feeding the material gas to a first axial end of the reforming chamber (152C); a return pipe (153B) substantially coaxially fitted into the feed pipe (153A) such that its first end penetrates the reforming chamber (152C) and opens in a vicinity of a second axial end within the reforming chamber (152C) so as to allow the reformate generated by reforming the material gas to flow thereinto. The reformer provides an efficient and stable reforming treatment with a simplified structure.

## Description

### Technical Field

The present invention relates to a reformer for conducting a reforming treatment with use of reformer agent filled therein, a reformer for generating reformate containing hydrogen gas by heating a material containing a hydrocarbon material with combustion gas of a burner, a reformer unit, and a fuel cell system including the reformer or the reformer unit.

### Background Art

To date, exemplarily for fuel cell systems, various reformers for reforming fed material gas with reformer agents and generating hydrogen gas have been known. Such a reformer has a double-pipe structure having void portions in a radially multi-ringed manner, and heats material gas mixed with steam with combustion by a burner (heater) substantially centrally disposed for reforming the material gas (e.g., a patent document 1 or 7).

For another fuel cell system, various reformers for reforming fed material gas with reformer agents while heating the material gas with burners and generating hydrogen gas have been known. Such a reformer typically has a double-pipe structure having void portions in a radially multi-ringed manner, and heats material gas mixed with steam with combustion by a burner substantially centrally disposed for reforming the material gas (e.g., patent documents 1 to 7).

According to the patent document 1, a combustion cylinder provided with a concentric opening near its lower end and mounted with a burner at its upper side such that the burner produces downward flames is disposed in a partition wall of a bottom-having cylinder, and the combustion cylinder is internally divided into a vertically columnar first area and an annular second area concentric and external to the first area and communicated with the first area via the opening of the combustion cylinder.
In the second area, a plurality of double-pipe reforming pipes of which outer circumferential sides are filled with a reforming catalyst are disposed around the circumference of the second area to extend in the axial direction. Upper ends of the reforming pipes are connected with a material-gas manifold while their outer circumferential sides are in communication therewith.
Externally to the second area, a concentric annular third area communicated with the second area at its upper end and an annular fourth area concentric and external to the third area are defined. In the third area, a water-vaporizing pipe for generating steam from fed water with use of combustion gas (heating gas) of the burner flowing through the second area is helically disposed substantially concentrically to the first area. The fourth area is divided so that a high-temperature CO (carbon monoxide) transformer filled with a high-temperature CO-transforming catalyst, a low-temperature CO transformer and first and second selective oxidation units filled with selective-oxidizing catalysts are circumferentially disposed therein. Each of the above is connected to a reformate manifold connected with communication portions communicated with inner circumferential sides of the reforming pipes
The material gas, which has been mixed with the steam generated by the water-vaporizing pipe with use of the combustion gas of the burner introduced in the third area from the first area through the second area, flows in the outer circumferential sides of the reforming pipes from the material-gas manifold. Further, the material gas is reformed by the reforming catalyst while being heated by the combustion gas of the burner introduced in the second area, and then delivered through the communication pipes and the reformate manifold to the high-temperature CO transformer, the low-temperature CO transformer, the first selective oxidation unit and the second oxidation unit for treatments.

Further according to the patent document 1, a cylindrical heat-transfer wall is provided for surrounding the burner about the center axis at which the burner mounted via a burner mount is positioned, and a plurality of first to eighth cylinder bodies are sequentially disposed concentrically and externally to the heat-transfer wall. A lower end of the first cylinder body is closed by a bottom plate between which and the heat-transfer wall a clearance is interposed. A lower end of the third cylinder body is closed by a bottom plate opposed to the bottom plate of the first cylinder body with a clearance interposed therebetween. A passage between the second cylinder body and the third cylinder body is communicated with between the first cylinder body and the second cylinder body at its lower side.
An exhaust passage defined between the heat-transfer wall and the first cylinder body is opened to its outer circumferential side at its upper end to be connected to an outlet of combustion exhaust gas. Between the exhaust passage and the burner mount, a water-heating passage communicated with a feed port for feeding water is defined. A flow passage communicated at its upper side with a feed port for feeding the material gas and provided with a helical fin for helically circulating the material gas is provided between the first cylinder body and the second cylinder body. An upper portion of the flow passage is provided with a preheat layer filled with a filling material while its lower portion is provided with a reforming catalyst layer filled with a reforming catalyst and communicated to the passage between the second cylinder body and the third cylinder body at its lower side. A clearance to be filled with a heat insulator is provided between the third cylinder body and the fourth cylinder body.
A shift layer connected to the reforming catalyst layer at its upper end and filled with a CO-transforming catalyst is provided between the fourth cylinder body and the fifth cylinder body. The sixth cylinder body is interposed between the fifth cylinder body and the seventh cylinder body, providing a heating passage communicated with the feed port of the material gas and also with an upper portion of the preheat layer at its downstream side. Between the seventh cylinder body and the eighth cylinder body, a first PROX layer and the second PROX layer are provided. The first PROX layer is defined by partition plates in such a manner that the gas is circulatable, and filled with a CO-removing catalyst via a mixing chamber communicated with a lower portion of the shift layer at its lower side and fed with air. The second PROX layer is communicated with the first PROX layer and also with an outlet of reformate.

According to the patent document 2, a cylindrical heat-transfer wall is provided for surrounding a burner about the center axis at which the burner mounted via a burner mount is positioned, and a plurality of first to eighth cylinder bodies are sequentially disposed concentrically and externally to the heat-transfer wall. A lower end of the first cylinder body is closed by a bottom plate between which and the heat-transfer wall a clearance is interposed. A lower end of the third cylinder body is closed by a bottom plate opposed to the bottom plate of the first cylinder body with a clearance interposed therebetween. A passage between the second cylinder body and the third cylinder body is communicated with between the first cylinder body and the second cylinder body at its lower side.
An exhaust passage defined between the heat-transfer and the first cylinder body is opened to its outer circumferential side at its upper end to be connected to an outlet of combustion exhaust gas. Between the exhaust passage and the burner mount, a water-heating passage communicated with a feed port for feeding water is defined. Between the first cylinder body and the second cylinder body, a preheat layer and a reforming catalyst layer are provided. The preheat layer is communicated at its upper side with a feed port for feeding the material gas and formed by filling an upper portion between the first cylinder body and the second cylinder body with filling materials. The reforming catalyst layer is communicated to the passage between the second cylinder body and the third cylinder body at its lower side and formed by filling a lower portion between the first cylinder body and the second cylinder body with a reforming catalyst. A clearance to be filled with a heat insulator is provided between the third cylinder body and the fourth cylinder body.
A shift layer connected to the reforming catalyst layer at its upper end and filled with a CO-transforming catalyst is provided between the fourth cylinder body and the fifth cylinder body. The sixth cylinder body is interposed between the fifth cylinder body and the seventh cylinder body, providing a heating passage communicated with the feed port of the material gas and also with an upper portion of the preheat layer at its downstream side. Between the seventh cylinder body and the eighth cylinder body, a first PROX layer filled with a CO-removing catalyst is defined by partition plates in such a manner that the gas is circulatable via a chamber communicated with a lower portion of the shift layer at its lower side and fed with air. Between the seventh cylinder body and the eighth cylinder body, a plurality of chambers are defined by gas-circulatable partition plates such that turbulence is caused in the circulated gas, and a second PROX layer is communicated with the first PROX layer the chambers and also with an outlet of reformate via the chambers.

According to the patent document 3, a cylindrical heat-transfer wall is provided for surrounding a burner about the center axis at which the burner mounted via a burner mount is positioned, and a plurality of first and eighth cylinder bodies are sequentially disposed concentrically and externally to the heat-transfer wall. A lower end of the first cylinder body is closed by a bottom plate between which and the heat-transfer wall a clearance is interposed. A lower end of the third cylinder body is closed by a bottom plate opposed to the bottom plate of the first cylinder body with a clearance interposed therebetween. A passage between the second cylinder body and the third cylinder body is communicated with between the first cylinder body and the second cylinder body at its lower side. Lower ends of the fourth cylinder body and the eighth cylinder body are jointed together by a bottom plate.
An upper end of an exhaust passage (circular-cylindrical clearance) defined between the heat transfer wall and the first cylinder body is communicated with an outlet of the combustion exhaust gas opened to the outer circumferential side. An upper portion of the passage between the first cylinder body and the second cylinder body is communicated with a feeding port for feeding a material gas generated by mixing water and city gas while its lower portion is connected to a reforming catalyst layer formed by filling a reforming catalyst between the second cylinder body and the third cylinder body. A clearance is provided between the third cylinder body and the fourth cylinder body.
A shift layer connected to the reforming catalyst layer at its upper end and filled with a CO-transforming catalyst is provided between the fourth cylinder body and the fifth cylinder body. A shift layer connected to between the fourth cylinder body and the fifth cylinder body is formed in a lower portion between the seventh cylinder body and the eighth cylinder body. An upper portion of the shift layer is provided with a mixing chamber for mixing air defined by partition plates, and an upper portion of the mixing chamber is provided with a PROX layer communicated with an outlet of reformate and filled with CO selective-oxidizing catalyst. The sixth cylinder body is interposed between the fifth cylinder body and the seventh cylinder body, providing a heating passage communicated with the feed port of the material gas and also with an upper portion of the passage between the first cylinder body and the second cylinder body at its downstream side for heating the material gas. The lower portion to which the shift layer between the forth cylinder body and the fifth cylinder body and the shift layer between the seventh cylinder body and the eight cylinder body are connected is provided with a drainage unit for draining the water piled inside.

According to the patent document 4, a cylindrical heat-transfer wall is provided for surrounding a burner about the center axis at which the mounted burner is positioned, and a plurality of first to eighth cylinder bodies are sequentially disposed concentrically and externally to the heat-transfer wall. A lower end of the first cylinder body is closed by a bottom plate between which and the heat-transfer wall a clearance is interposed. A lower end of the third cylinder body is closed by a bottom plate opposed to the bottom plate of the first cylinder body with a clearance interposed therebetween. A passage between the second cylinder body and the third cylinder body is communicated with between the first cylinder body and the second cylinder body at its lower side. Lower ends of the fourth cylinder body and the eighth cylinder body are jointed together by a bottom plate.
An upper end of an upward passage (circular cylindrical clearance) defined between the heat transfer wall and the first cylinder body is communicated with a circular annular intermediate passage in the horizontal direction. A downward passage of circular cylindrical clearance downwardly extends from the outer circumference of intermediate passage to be connected to an exhaust outlet of combustion exhaust gas at its lower end. A circular cylindrical fed-water preheater for preheating water fed from a water-feeding port provided at its lower end adjoins to the outer circumference of the downward passage. An upper end of the fed-water preheater is provided with a connecting portion connected to an annular chamber connected with a feeding port of the material gas and fed with the material gas and humidified steam. A circular cylindrical material preheater adjoins to the inner circumference of the downward passage. An upper portion between the first cylinder body and the second cylinder body is provided with a preheat layer connected at its upper side with a heating passage connected to the annular chamber and filled with filling materials such as stainless steel and alumina. A lower portion between the first cylinder body and the second cylinder body is provided with a reforming catalyst layer filled with a reforming catalyst.
A heat insulator is filled in between the third cylinder body and the fourth cylinder body. A shift layer connected to the passage at its upper end and filled with a CO-transforming catalyst is provided between the fourth cylinder body and the fifth cylinder body. The sixth cylinder body is interposed between the fifth cylinder body and the seventh cylinder body, providing a heating passage communicated with the preheat layer. The material gas fed from the material-gas feeding port and the water fed from the water-feeding port pass through the heating passage in a mixture state. Between the seventh cylinder body and the eighth cylinder body, a first PROX layer and the second PROX layer are provided. The first PROX layer is communicated at its lower side with a lower portion of the shift layer and filled with a CO-removing catalyst to be fed with air. The second PROX layer is defined by partition plates at an upper side of the first PROX layer.

According to the patent document 5, a reforming pipe of which at least lower portion is covered by a vessel has a double-pipe structure provided by a vertically extending circular partition cylinder and inner and outer cylinders. The inner and outer cylinders are concentrically disposed internally and externally to the circular partition cylinder, and lower portions of the inner and outer cylinders are connected together by a ring-shaped bottom plate at a position spaced apart from the lower end of the circular partition cylinder. The reforming pipe has a material gas port between the circular partition cylinder and the outer cylinder with a material gas manifold interposed at the upper side. The lower end of the reforming pipe defines an outer annular space communicated with an inner annular space defined between the circular partition cylinder and the inner cylinder.
The inner annular space is filled with a granular reforming catalyst and provided with a reformate outlet at its upper side with a reformate manifold interposed. The combustion gas generated by combustion of the burner is exhausted from the inside of the inner cylinder of the reforming pipe to be exited from the lower end of the reforming pipe to pass through the clearance between the reforming pipe and the inner circumference of the vessel. At the time of exhausting the combustion gas, the material gas fed into the outer annular space is heated, so that the heated material gas flows into the inner annular space to be subjected to a reforming treatment by the granular reforming catalyst.

According to the patent document 6, a combustion cylinder provided with a concentric opening near its lower end and mounted with a burner at its upper side such that the burner produces downward flames is disposed in a partition wall of a bottom-having cylinder, and the combustion cylinder is internally divided into a vertically columnar first area and an annular second area concentrically external to the first area and communicated with the first area via the opening of the combustion cylinder.
In the second area, a plurality of double-pipe reforming pipes of which outer circumferential sides are filled with a reforming catalyst are disposed around the circumference of the second area to extend in the axial direction. Upper ends of the reforming pipes are connected with a material-gas manifold so that its outer circumferential side is communicated therewith.
Externally to the second area, a concentric annular third area communicated with the second area at its upper end and an annular fourth area concentric and external to the third area are defined. In the third area, a water-vaporizing pipe for generating steam from fed water with use of combustion gas of the burner flowing through the second area is helically disposed substantially concentrically to the first area. The fourth area is divided so that a high-temperature CO (carbon monooxide) transformer filled with a high-temperature CO-transforming catalyst and connected to a reformate manifold connected with communication portions communicated with inner circumferential sides of the reforming pipes, a low-temperature CO transformer and first and second selective oxidation units filled with selective-oxidizing catalysts are circumferentially disposed therein.
The material gas, which has been mixed with the steam generated by the water-vaporizing pipe with use of the combustion gas of the burner introduced in the third area from the first area through the second area, flows in the outer circumferential sides of the reforming pipes from the material-gas manifold. Further, the material gas is reformed by the reforming catalyst while being heated by the combustion gas of the burner introduced in the second area, and then delivered through the communication pipes and the reformate manifold to the high-temperature CO transformer, the low-temperature CO transformer, the first selective oxidation unit and the second oxidation unit for treatments.

According to the patent document 7, related apparatus such a reformer, a desulfurization unit, a water-vaporizing unit, a material-fuel carburetor, a low-temperature shift converter and selective oxidation CO remover are integrated in a single unit, and disposed within a vacuum thermal-insulated container. Combustion gas of a combustor passes through the inner space of the vacuum thermal-insulated container. A plurality of reforming pipes having a double-pipe structure including an inner pipe and an outer pipe are disposed around the combustor. A reforming catalyst is filled in between the inner pipe and the outer pipe so as to circulate the material gas therethrough, and the reformate is circulated into the inner pipe.

**Patent Document 1:** JP-A-2002-187705
**Patent Document 2:** JP-A-2002-293509
**Patent Document 3:** JP-A-2003-112904
**Patent Document 4:** JP-A-2004-123464
**Patent Document 5:** JP-A-5-303972
**Patent Document 6:** JP-A-2004-288434
**Patent Document 7:** JP-A-2003-327405

### Disclosure of the Invention

### Problems to Be Solved by the Invention

However, according to such a conventional arrangement as in the patent document 1 or 7, which uses the double-pipe reforming pipe filled with the reforming catalyst, only a limited volume of the reforming catalyst can be filled. Thus, reforming treatment may not be sufficiently obtained. In addition, load applied on the reforming catalyst may be increased, so that lifetime may be shortened. Such an arrangement requires a complicated structure, so that operations for replacing the reforming catalyst may be complicated.

Energy efficiency is important for fuel cell systems. In manufacturing hydrogen gas to be fed to fuel cells, heating at the time of reforming requires comparatively large energy as compared to the other processes. Accordingly, reforming treatment is required to be conducted with efficient heating.
Particularly, it has been increasingly demanded to suppress reduction in energy efficiency due to downsizing or structural simplification for household use and to further enhance energy efficiency.

In view of the above, an object of the invention is to provide a reformer, a reformer unit and a fuel cell system capable of conducting an efficient and stable reforming treatment with a simplified structure.

### Means for Solving the Problems

A reformer according an aspect of the invention is a reformer that generates a reformate containing a hydrogen gas by heating a material gas containing a hydrocarbon material with a presence of a reforming catalyst, the reformer including: a reformer container including: an inner cylindrical body and an outer cylindrical body respectively having different diameters and being substantially coaxial with each other; and a reforming chamber defined between the inner cylindrical body and the outer cylindrical body, the reforming chamber having a substantially annular space filled with the reforming catalyst; a heater disposed substantially on a center axis of the inner cylindrical body of the reformer container; and a circulation portion having a plurality of double-pipe structures each of which includes: a feed pipe connected to a first axial end of the reformer container for feeding the material gas to a first axial end of the reforming chamber; and a return pipe substantially coaxially fitted into the feed pipe such that its first end penetrates the reforming chamber and opens in a vicinity of a second axial end within the reforming chamber so as to allow the reformate generated by reforming the material gas to flow thereinto.
The reformer according to the aspect of the invention includes the reformer container in which the reforming chamber of a substantially annular space to be filled with the reforming catalyst is defined between: the inner cylindrical body in which the burner is positioned substantially on the center axis; and the outer cylindrical body having a different diameter from the inner cylindrical body and disposed substantially coaxially with the inner cylindrical body. In addition, the feed pipe for feeding the material gas containing the hydrocarbon material to the first axial end of the reforming chamber of the reformer container is connected to the first axial end of the reformer container. In addition, the return pipe substantially coaxially fitted into the feed pipe is disposed such that its first end penetrates the reforming chamber and opens in the reforming chamber so as to allow the reformate generated in the vicinity of the second axial end of the preforming chamber to flow thereinto. The circulation portion is arranged to include the double-pipe portions each structured as above.
With this arrangement, in feeding the fuel cell with the reformate for use therein as hydrogen gas, a space necessary for filling the reforming catalyst in an amount corresponding to the desired amount of the reformate can be comparatively easily secured. Thus, it is only required to fill the reforming catalyst in the substantially annular space, thereby enhancing the workability. In addition, the feed pipes for feeding the material gas to the reforming chamber and the return pipes for circulating and collecting the reformate generated by the reforming catalyst in the reforming chamber provide the circulation portion having substantially coaxial double-pipe structures. Thus, the structure for feeding the material gas and the structure for collecting the reformate are collectively arranged on a first side of the reformer container, so that these structures cause less interference with the heat insulator or other strictures of the reformer container. Accordingly, structural downsizing can be easily realized. Further, the material, gas fed by the feed pipes is heated by the reformate heated up to a predetermined temperature during the generation when the reformate is circulated through the return pipes fitted into the feed pipes, thereby contributing to favorable heat efficiency.

Preferably in the reformer according to the aspect of the invention, a filler is filled between the feed pipe and the return pipe in the circulation portion in such a manner that the material gas is circulatable.
According to the aspect of the invention, the filler is filled between the feed pipe and the return pipe in the circulation portion in such a manner that the material gas is circulatable. Examples of the filler are metals such as stainless steel having heat resistance and corrosion resistance and inorganic materials such as alumina grain.
With this arrangement, a heat exchange between the material gas circulated through the feed pipes and the reformate circulated through the return pipes can be conducted at enhanced efficiency, thereby contributing to more favorable heat efficiency.

Preferably in the reformer according to the aspect of the invention, the feed pipe is connected to the first axial end of the reformer container at its first end while being connected to a material-gas feeder at its second end, the material-gas feeder internally having a substantially columnar space into which the material gas flows, and the return pipe penetrates the material-gas feeder to be connected to a reformate outflow portion at its second end, the reformate outflow portion being adjoined to the material-gas feeder and internally having a substantially columnar space into which the reformate flows.
According to the aspect of the invention, the second end of the feed pipe connected to the first axial end of the reformer container is connected to the material-gas feeder internally having a substantially columnar space into which the material gas flows. In addition, the second end of the return pipe, of which first end is opened in the vicinity of the second end of the reforming chamber, penetrates the feed pipe to be connected to the reformate outflow portion adjoining to the material-gas feeder and internally having a substantially columnar space into which the reformate flows.
Accordingly, in feeding the material gas into the reforming chamber through the feed pipes and collecting the reformate reformed and generated in the reforming chamber, the material gas and the reformate can be substantially uniformly circulated without drifting, and the filled reforming catalyst can be evenly used for reforming treatment. Additionally, a heat exchange between the material gas and the reformate can be conducted at enhanced efficiency. Thus, the reforming treatment can be efficiently and favorably conducted.

Preferably in the reformer according to the aspect of the invention, the material-gas feeder and the reformate outflow portion are shaped substantially in a cylinder having substantially a same diameter and continuously integrated with each other.
According to the aspect of the invention, the material-gas feeder connected with the feed pipe and fed with the material gas and the reformate outflow portion connected with the return pipe for accepting the inflow of the reformate generated in the reforming chamber are shaped substantially in a cylinder having substantially the same diameter to be continuously integrated with each other.
Since the material-gas feeder and the reformate outflow portion, which have substantially columnar spaces, are continuously integrated to have substantially the same diameter, the material-gas feeder and the reformate outflow portion are continuously formable, for instance, by axially partitioning a tubular member. Thus, simplification of the structure and enhancement of manufacturability can be easily realized. Furthermore, by continuously forming, for instance, the material-gas feeder and the reformate outflow portion from the outer cylindrical body of the reformer container to have the same diameter as the outer cylindrical body, further simplification of the structure and further enhancement of manufacturability can be realized. Thus, a system configuration with other members can be easily established, which also facilitates a downsizing of a system configuration.

Preferably in the reformer according to the aspect of the invention, the reformer container further includes an inflow space of a substantially annular space filled with no reforming catalyst, the inflow space being provided at the first axial end connected with the feed pipe of the circulation portion.
According to the aspect of the invention, the inflow space of a substantially annular space filled with no reforming catalyst is defined in the vicinity of the first axial end of the reformer container connected with the feed pipe of the circulation portion.
With this arrangement, the material gas to be fed into the reforming chamber from the feed pipes initially flows into the inflow space of a substantially annular space, so that the material gas substantially uniformly flows through the layer of the filled reforming catalyst. Thus, the material gas can more uniformly contact the reforming catalyst without drifting, so that a reforming treatment can be more favorably conducted.

Preferably in the reformer according to the aspect of the invention, the reformer container further includes an inflow space of a substantially columnar space filled with no reforming catalyst, the inflow space being provided at the first axial end connected with the feed pipe of the circulation portion.
According to the aspect of the invention, the inflow space of a substantially columnar space filled with no reforming catalyst is defined in the vicinity of the first axial end of the reformer container connected with the feed pipe of the circulation portion.
With this arrangement, the material gas to be fed into the reforming chamber from the feed pipes initially flows into the inflow space of a substantially columnar space, so that the material gas substantially uniformly flows through the layer of the filled reforming catalyst. Thus, the material gas can more uniformly contact the reforming catalyst without drifting, so that a reforming treatment can be more favorably conducted.

A reformer according another aspect of the invention is a reformer that generates a reformate containing a hydrogen gas by heating a material gas containing a hydrocarbon material with a presence of a reforming catalyst, the reformer including: a reformer container including: an inner cylindrical body and an outer cylindrical body respectively having different diameters and being substantially coaxial with each other; and a reforming chamber defined between the inner cylindrical body and the outer cylindrical body, the reforming chamber having a substantially annular space filled with a filler adjacently to its first axial end while being filled with the reforming catalyst adjacently to its second axial end; a heater disposed substantially on a center axis of the inner cylindrical body of the reformer container; and a circulation portion including: a feed pipe connected to a first axial end of the reformer container for feeding the material gas to a first axial end of the reforming chamber; and a plurality of return pipes fitted into the feed pipe such that their first ends penetrate the reforming chamber and open in a vicinity of a second axial end within the reforming chamber so as to allow the reformate generated by reforming the material gas to flow thereinto.
The reformer according to the aspect of the invention includes the reformer container in which the reforming chamber of a substantially annular space to be filled with the reforming catalyst and the filler is defined between: the inner cylindrical body in which the burner is positioned substantially on the center axis; and the outer cylindrical body having a different diameter from the inner cylindrical body and disposed substantially coaxially with the inner cylindrical body. Further, the feed pipe for feeding the material gas containing the hydrocarbon material to the first axial end of the reforming chamber of the reformer container is connected to the first axial end of the reformer container. In addition, the return pipes substantially coaxially fitted into the feed pipe are disposed such that their first end penetrate the reforming chamber and open in the reforming chamber so as to allow the reformate generated in the vicinity of the second axial end of the reforming chamber to flow thereinto. The circulation portion is arranged to include the above feed pipe and the plurality of return pipes.
With this arrangement, in feeding the fuel cell with the reformate for use therein as hydrogen gas, a space necessary for filling the reforming catalyst in an amount corresponding to the desired amount of the reformate can be comparatively easily secured. Thus, it is only required to fill the reforming catalyst in the substantially annular space, thereby enhancing the workability. In addition, the feed pipe for feeding the material gas to the reforming chamber and the return pipes for circulating and collecting the reformate generated by the reforming catalyst in the reforming chamber provide the circulation portion in which the plurality of return pipes are fitted into the feed pipe. Thus, the structure for feeding the material gas and the structure for collecting the reformate are collectively arranged on a first side of the reformer container, so that these structures cause less interference with the heat insulator or other structures of the reformer container. Accordingly, structural downsizing can be easily realized. Further, by filling the filler into the reforming chamber, the reformer container simply arranged to have a substantially annular space can efficiently enhance efficiency of a heat exchange with the reformate circulated in the return pipes. Thus, enhancement of manufacturability can be easily realized with a simplified structure, and an arrangement for efficiently conducting a reforming treatment can be easily obtained. Further, the material gas fed by the feed pipe is heated by the reformate having been heated up to a predetermined temperature during the generation when the reformate is circulated through the return pipes fitted into the feed pipe, thereby contributing to favorable heat efficiency.

Preferably in the reformer according to the aspect of the invention, the feed pipe is shaped in a cylinder in which a feed chamber of a substantially columnar space is defined, and the return pipes penetrate the feed pipe to be connected to a reformate outflow portion at its second end, the reformate outflow portion being adjoined to the feed pipe and internally having a substantially columnar space into which the reformate flows.
According to the aspect of the invention, the feed pipe connected to the first axial end of the reformer container is shaped substantially in a cylinder in which the feed chamber of a substantially columnar space is defined. In addition, the second end of the return pipes, of which first ends are opened in the vicinity of the second end of the reforming chamber, penetrates the feed pipe to be connected to the reformate outflow portion adjoining to the feed pipe and internally having a substantially columnar space into which the reformate flows.
Accordingly, in feeding the material gas into the reforming chamber through the feed pipes and collecting the reformate reformed and generated in the reforming chamber, the material gas and the reformate can be substantially uniformly circulated without drifting, and the filled reforming catalyst can be evenly used for reforming treatment. Additionally, a heat exchange between the material gas and the reformate can be conducted at enhanced efficiency. Thus, the reforming treatment can be efficiently and favorably conducted.

Preferably in the reformer according to the aspect of the invention, the feed pipe is shaped in a cylinder having substantially a same diameter as the outer cylindrical body of the reformer container and continuously integrated with the outer cylindrical body, and the reformate outflow portion is shaped in a cylinder having substantially a same diameter as the feed pipe and continuously integrated with the feed pipe.
According to the aspect of the invention, the feed pipe shaped in a cylinder having substantially the same diameter as the outer cylindrical body of the reformer container and continuously integrated with the outer cylindrical body is also continuously integrated with the reformate outflow portion connected with the return pipes through the feed pipe and shaped in a cylinder having substantially the same diameter as the feed pipe.
Since the substantially cylindrical outer cylindrical body of the reformer container, the cylindrical feed pipes having a substantially columnar space and the reformate outflow portion to which the return pipes are connected are continuously integrated, the outer cylindrical body, the cylindrical feed pipes and the reformate outflow portion are continuously formable, for instance, by axially partitioning a tubular member. Thus, simplification of the structure and enhancement of manufacturability can be easily realized. Further, a system configuration with other members can be easily formed, which also facilitates a downsizing of a system configuration.

Preferably in the reformer according to the aspect of the invention, the return pipe is helical in a region filled with the reforming catalyst within the reforming chamber of the reformer container.
According to the aspect of the invention, the return pipe(s) is helical in a region filled with the reforming catalyst within the reforming chamber of the reformer container.
With this arrangement, a heat exchange between the reformate circulated through the return pipe(s) and the reforming catalyst can be conducted at enhanced efficiency, thereby contributing to an efficient and favorable reforming treatment.

A reformer according still further aspect of the invention is a reformer that generates a reformate containing a hydrogen gas by heating a material gas containing a hydrocarbon material with a presence of a reforming catalyst, the reformer including: a reformer container including: an inner cylindrical body and an outer cylindrical body respectively having different diameters and being substantially coaxial with each other; and a reforming chamber defined between the inner cylindrical body and the outer cylindrical body, the reforming chamber having a substantially annular space filled with the reforming catalyst; a radiation pipe shaped in a cylinder having a smaller diameter than the inner cylindrical body of the reformer container, the radiation pipe being disposed adjacent to an inner circumference of the inner cylindrical body substantially coaxially with the inner cylindrical body; a heater disposed within the radiation pipe and feeding a heating gas to a first axial end of the reforming chamber; and a rectifier pipe shaped in a cylinder having a smaller diameter than the radiation pipe, a first axial end of the cylinder opposed to the heater being at least partially closed by a closure plate so as to at least partially block the heating gas of the heater, the rectifier pipe being disposed adjacent to an inner circumference of the radiation pipe substantially coaxially with the radiation pipe so that the heating gas of the heater is circulatable between its outer circumference and the inner circumference of the radiation pipe, the radiation pipe being heated by the heater.
The reformer according to the aspect of the invention includes the reformer container in which the reforming chamber of a substantially annular space to be filled with the reforming catalyst is defined between: the inner cylindrical body; and the outer cylindrical body having a different diameter from the inner cylindrical body and disposed substantially coaxially with the inner cylindrical body. Further, the radiation pipe shaped in a cylinder having a smaller diameter than the inner cylindrical body of the reformer container is substantially coaxially disposed adjacent to the inner circumference of the inner cylindrical body while the heater is disposed adjacent to the inner circumference of the radiation pipe at a position substantially corresponding to the first axial end of the reforming chamber of the reformer container. In addition, the rectifier pipe, which is shaped in a cylinder having a smaller diameter than the radiation pipe and having its first axial end opposite to the heater at least partially closed by the closure plate so as to at least partially block the circulation of the heating gas, is substantially coaxially disposed adjacent to the inner circumference of the radiation pipe in such a manner that the heating gas of the heater is circulatable between the outer circumference of the rectifier pipe and the inner circumference of the radiation pipe.
With this arrangement, the heating gas flows into the inner circumferential side of the rectifier pipe from the second end thereof (end not closed by the closure plate) and flows out of the inner circumferential side in a turning-back manner. Then, the heating gas is circulated between the rectifier pipe and the radiation pipe. Thus, while the rectifier pipe is heated, the radiation pipe located adjacent to the inner circumference of the reformer container can be efficiently heated. In addition, the heat from the rectifier pipe also heats the reformer container via the heated radiation pipe, so that temperature dispersion in the axial direction of the reformer container can be suppressed. Accordingly, heating can be efficiently conducted and the reforming treatment of the material gas can be stably conducted. Further, the radiation pipe arranged to support the heater is usable. Thus, by simply providing the cylindrical rectifier pipe, the reformer container can be stably heated.
The closure plate may be of any other shape. For instance, the closure plate may be shaped in a plate through which no heating gas is circulatable, or may have a hole through which the heating gas is partially circulatable. Alternatively, the closure plate may be configured as a mesh.

Preferably in the reformer according to the aspect of the invention, the reformer container is disposed such that its center axis extends substantially along a vertical direction, the heater is disposed such that the heating gas flows substantially downwardly in the vertical direction, and the rectifier pipe is disposed to upwardly open.
According to the aspect of the invention, in the reformer container disposed such that its center axis extends substantially in the vertical direction, the heater is disposed such that the heating gas flows substantially downwardly in the vertical direction, and the rectifier pipe is disposed to upwardly open (i.e., disposed such that its first end closed by the closure plate is located downward in the axial direction).
With this arrangement, dripping from the heater, condensation on the rectifier pipe at the time of shutdown and the like can be prevented from entering the heater. Thus, the heater can stably generate the heating gas, and stable operations can be easily obtained.

Preferably in the reformer according to the aspect of the invention, the reformer container is disposed such that its center axis extends substantially along a vertical direction, the heater is disposed such that the heating gas flows substantially upwardly in the vertical direction, and the rectifier pipe is disposed to downwardly open.
According to the aspect of the invention, in the reformer container disposed such that its center axis extends substantially in the vertical direction, the heater is disposed such that the heating gas flows substantially upwardly in the vertical direction, and the rectifier pipe is disposed to downwardly open (i.e., disposed such that its first end closed by the closure plate is located upward in the axial direction).
With this arrangement, by mounting the end of the rectifier pipe on the end of the radiation pipe (e.g., locking or coupling the end of the rectifier pipe to the end of the radiation pipe), the rectifier pipe can be easily disposed. Thus, structural simplification and enhancement of manufacturability can be easily realized.

Preferably in the reformer according to the aspect of the invention, the rectifier pipe includes a support protruding outwardly from the first axial end closed by the closure plate, the support being supported on an end of the radiation pipe in a manner suspended from the end of the radiation pipe.
According to the aspect of the invention, the outwardly-protruding support provided at the first axial end of the rectifier pipe closed by the closure plate is supported on the end of the radiation pipe in a manner suspended from the end of the radiation pipe.
With this arrangement, the support simply structured to outwardly protrude can support the rectifier pipe within the radiation pipe. Thus, structural simplification, enhancement of manufacturability and downsizing can be easily realized.

Preferably in the reformer according to the aspect of the invention, the reformer container is fed with the material gas so that the material gas is circulated substantially along an axis direction of the reformer container within the reforming chamber to output the reformate, and the rectifier pipe is disposed at a position not opposed to a portion of the inner cylindrical body of the reformer container, the portion of the inner cylindrical body corresponding to an upstream side of a direction in which the material gas is circulated within the reforming chamber.
According to the aspect of the invention, in the reformer container fed with the material gas such that the material gas is circulated substantially along the axial direction within the reforming chamber for outputting the reformate, the rectifier pipe is disposed so as not to be opposed to the lower end of the inner cylindrical body (i.e., upstream side of the material gas circulated within the reforming chamber). In other words, the rectifier pipe is disposed so as not to be positioned at a position corresponding to the upstream side of the material gas circulation.
With this arrangement, the radiation heat from the rectifier pipe heated by the heater becomes less influential over the upstream side of the material gas circulation, thereby preventing overheating of the reforming chamber at the upstream side of the material gas circulation. Thus, the entirety of the reforming chamber can provide a substantially uniform and stable reforming treatment, and an efficient reforming treatment can be easily obtained with a simplified arrangement.

The reformer according to the aspect of the invention preferably further includes a circulation portion having a plurality of double-pipe structures each of which includes: a feed pipe connected to a first axial end of the reformer container for feeding the material gas to a first axial end of the reforming chamber; a return pipe substantially coaxially fitted into the feed pipe such that its first end penetrates the reforming chamber and opens in a vicinity of a second axial end within the reforming chamber so as to allow the reformate generated by reforming the material gas to flow thereinto.
According to the aspect of the invention, the feed pipe for feeding the material gas containing the hydrocarbon material to the first axial end of the reforming chamber of the reformer container is connected to the first axial end of the reformer container. In addition, the return pipe substantially coaxially fitted into the feed pipe is disposed such that its first end penetrate and open in the reforming chamber so as to allow the reformate generated in the vicinity of the second axial end of the reforming chamber to flow thereinto. The circulation portion is arranged to include the double-pipe portions each structured as above.
With this arrangement, in feeding the fuel cell with the reformate for use therein as hydrogen gas, a space necessary for filling the reforming catalyst in an amount corresponding to the desired amount of the reformate can be comparatively easily secured. Thus, it is only required to fill the reforming catalyst in the substantially annular space, thereby enhancing the workability. In addition, the feed pipes for feeding the material gas to the reforming chamber and the return pipes for circulating and collecting the reformate generated by the reforming catalyst in the reforming chamber provide the circulation portion having substantially coaxial double-pipe structures. Thus, the structure for feeding the material gas and the structure for collecting the reformate are collectively arranged on a first side of the reformer container, so that these structures cause less interference with the heat insulator, heater or other structures of the reformer container. Accordingly, structural downsizing can be easily realized. In addition, with a simplified arrangement, the material gas can be easily circulated substantially along the axial direction of the reforming chamber. Further, the material gas fed by the feed pipes is heated by the reformate heated up to a predetermined temperature during the generation when the reformate is circulated through the return pipes fitted into the feed pipes, thereby contributing to favorable heat efficiency.

The reformer according to the aspect of the invention preferably further includes a circulation portion having a plurality of double-pipe structures each of which includes: a feed pipe connected to a first axial end of the reformer container for feeding the material gas to a first axial end of the reforming chamber; a return pipe substantially coaxially fitted into the feed pipe such that its first end penetrates the reforming chamber and opens in a vicinity of a second axial end within the reforming chamber so as to allow the reformate generated by reforming the material gas to flow thereinto, in which the reformer container further includes an inflow space of a substantially columnar space filled with no reforming catalyst, the inflow space being provided at the first axial end connected with the feed pipe of the circulation portion, and the rectifier pipe comprises a mounting portion for mounting the rectifier pipe on the inflow space such that the rectifier pipe is upwardly open.
According to the aspect of the invention, the feed pipe for feeding the material gas containing the hydrocarbon material to the first axial end of the reforming chamber of the reformer container is connected to the first axial end of the reformer container. In addition, the return pipe substantially coaxially fitted into the feed pipe is disposed such that its first end penetrate and open in the reforming chamber so as to allow the reformate generated in the vicinity of the second axial end of the reforming chamber to flow thereinto. The circulation portion is arranged to include the double-pipe portions each structured as above. The inflow space of a substantially circular columnar space filled with no reforming catalyst is provided at the first axial end of the reformer container connected with the feed pipe of the circulation portion, and the rectifier pipe is mounted on the inflow space by the mounting portion such that the rectifier pipe is upwardly open.
With this arrangement, the material gas to be fed into the reforming chamber from the feed pipes initially flows into the inflow space of a substantially columnar space, so that the material gas substantially uniformly flows through the layer of the filled reforming catalyst. Thus, the material gas can more uniformly contact the reforming catalyst without drifting, so that a reforming treatment can be more favorably conducted. In addition, the inflow space simply structured to have a substantially columnar space for circulating the material gas into the reforming-catalyst layer without drifting can be used together with a structure for disposing the rectifier pipe simply with the mounting portion. Thus, structural simplification and enhancement of manufacturability can be easily realized. For instance, a simple structure where the cylindrically-structured mounting portion is continuously provided on the rectifier pipe is usable. With use of such a structure, further structural simplification and further enhancement of manufacturability can be easily realized.

The reformer according to the aspect of the invention preferably further includes a turbulence portion disposed helically around a center axis between the inner circumference of the radiation pipe and the outer circumference of the rectifier pipe.
According to the aspect of the invention, the turbulence portion is disposed helically around the center axis between the inner circumference of the radiation pipe and the outer circumference of the rectifier pipe.
With this arrangement, the heating gas that passes through between the inner circumference of the radiation pipe and the outer circumference of the rectifier pipe is circulated helically around the center axis. Thus, the rectifier pipe and the radiation pipe can be heated at enhanced efficiency, and an efficient reforming treatment can be easily obtained.

Preferably in the reformer according to the aspect of the invention, the turbulence portion is helically provided on the outer circumference of the rectifier pipe to protrude toward the inner circumference of the radiation pipe.
According to the aspect of the invention, the turbulence portion is helically provided on the outer circumference of the rectifier pipe to protrude toward the inner circumference of the radiation pipe.
With this arrangement, by forming the rectifier to have a wavy cross section or by helically winding an elongated steel product around the outer circumference of the rectifier pipe, helical circulation of the heating gas can be obtained with a simplified arrangement.

Preferably in the reformer according to the aspect of the invention, the rectifier pipe is peripherally widened at its second end opposite to the first axial end closed by the closure plate.
According to the aspect of the invention, the rectifier pipe is peripherally widened at its second end opposite to the first axial end closed by the closure plate.
With this arrangement, the heating gas can smoothly flow into the inner circumferential side of the rectifier pipe, thereby efficiently heating the rectifier pipe. Particularly with the arrangement where the heater is disposed such that the heating gas is circulated substantially upwardly in the vertical direction, condensation at the time of shutdown and the like can be prevented from dripping into the heater. Thus, by simply widening the periphery of the rectifier pipe, protection of the heater and stable combustion can be easily realized.

A reformer unit according to still further aspect of the invention includes: the above-described reformer; a steam generator that generates the steam from fed water with heating by the heater of the reformer; and a steam mixer that mixes steam into a desulfurized liquid fuel or a hydrocarbon-material gas and generates the material gas containing the hydrocarbon material.
The unit according to the aspect of the invention generates steam from fed water with heating by the heater of the above-described reformer by using the steam generator, and mixes the steam generated by the steam generator into the separately desulfurized liquid fuel or a hydrocarbon-material gas by using the steam mixer for generation of the material gas containing the hydrocarbon material (i.e., the material gas to be reformed by the reformer).
With this arrangement, the heat generated in the reforming treatment of the material gas in the reformer can be effectively used in the structure for generating the steam to be mixed for use in the reforming treatment and the structure for mixing such steam. Thus, heat efficiently can be further enhanced, and a reforming treatment can be efficiently and favorably conducted.

The reformer unit according to the aspect of the invention preferably further includes: a CO transformer fed with the reformate generated by the reformer and filled with a CO-transforming catalyst for transforming carbon monoxide (CO) contained in the reformate into carbon dioxide (CO₂) and a CO remover fed with the reformate processed by the CO transformer for removing CO residual in the reformate.
According to the aspect of the invention, the CO transformer filled with the CO-transforming catalyst transforms the CO contained in the reformate generated by the above-describe reformer into CO₂, and the CO remover removes the CO residual in the reformate having been treated with the CO transformer.
With this arrangement, the reformate having been reformed in the reformer can be immediately processed in the CO transformer and the CO remover for feeding the reformate to, for instance, the fuel cell as hydrogen gas in a facilitated manner. Such unitization can also facilitate application to household use and downsizing.

Preferably in the reformer unit according to the aspect of the invention, at least either one of the CO transformer and the CO remover is substantially annular while the other one of the CO transformer and the CO remover is disposed adjacent to an inner circumference of the at least either one of the CO transformer and the CO remover such that its axis direction extends along a substantially vertical direction, and the reformer is located upwardly in the vertical direction relative to the CO transformer and the CO remover and disposed such that an axis direction of the reformer container extends along the substantially vertical direction.
According to the aspect of the invention, at least either one of the CO transformer and the CO remover is substantially annular while the other one of the CO transformer and the CO remover is disposed adjacent to the inner circumference of the at least either one of the CO transformer and the CO remover such that its axis direction extends along a substantially vertical direction. Relative to the CO transformer and the CO remover disposed as above, the reformer is located upwardly in the vertical direction and disposed such that the axis direction of the reformer container extends along the substantially vertical direction.
With this arrangement, the unit configuration can easily have the reduced radial dimension and the reduced height dimension, and a small structure for household use can be easily obtained.

Preferably in the reformer unit according to the aspect of the invention, the steam generator includes a water pipe piped within at least one of the CO transformer and the CO remover, the water pipe being a pipe in which fed water is circulated.
According to the aspect of the invention, the steam generator for generating the steam from the fed water includes the water pipe in which fed water is circulated, and the water pipe is piped within at least one of the CO transformer and the CO remover.
With this arrangement, the structure for cooling the high-temperature reformate collected from the return pipes to a temperature suitable for the processing by the CO transformer and the CO remover can also serve as the structure for generating steam to be mixed with the separately desulfurized liquid fuel or hydrocarbon material gas for use in preparing the material gas. Thus, further simplification of the structure and further enhancement of heat efficiency can be realized.

Preferably in the reformer unit according to the aspect of the invention, the steam generator includes a water-circulating pipe piped at a position adjacent to an outer circumference of the circulation portion of the reformer, the water-circulating pipe being a pipe in which fed water is circulated.
According to the aspect of the invention, the steam generator for generating the steam from the fed water includes the water-circulating pipe in which fed water is circulated, and the water-circulating pipe is piped at the position adjacent to the outer circumference of the circulation portion of the reformer.
With this arrangement, the structure for cooling the high-temperature reformate collected from the return pipes can also serve as the structure for generating steam to be mixed with the separately desulfurized liquid fuel or hydrocarbon material gas for use in preparing the material gas. Thus, further simplification of the structure and further enhancement of heat efficiency can be realized. In addition, the water-circulating pipe can also serve as a heat insulator, thereby contributing to facilitation of downsizing of a unit configuration.

A fuel cell system according to still further aspect of the invention includes: the above-described reformer or the above-described reformer unit; an oxygen-containing gas feeder that feeds an oxygen-containing gas; and a fuel cell that generates power using the reformate generated by the reformer unit and the oxygen-containing gas fed by the oxygen-containing gas feeder.
According to the aspect of the invention, the fuel cell generates power using the reformate generated by the above-described reformer or by the above-described reformer unit and the oxygen-containing gas fed by the oxygen-containing gas feeder.
Accordingly, a small system configuration capable of efficient and stable power generation can be provided, and application to a household use can be facilitated. Thus, expansion of use can be easily realized.

### Brief Description of Drawings

Fig. 1 is a block diagram schematically showing an arrangement of a fuel cell system according to an aspect of the invention.
Fig. 2 is a conceptual diagram schematically showing an arrangement of a reformer unit according to first and second exemplary embodiments in the fuel cell system.
Fig. 3 is a conceptual diagram schematically showing an arrangement in the vicinity of a reformer of the reformer unit according to the second exemplary embodiment.
Fig. 4 is a planar cross-sectional view showing a reforming chamber of the reformer unit according to the first and second exemplary embodiments.
Fig. 5 is a conceptual diagram schematically showing an arrangement of a reformer unit according to a third exemplary embodiment of the invention.
Fig. 6 is a conceptual diagram schematically showing an arrangement in the vicinity of a reformer of a reformer unit according to a fifth exemplary embodiment of the invention.

### Explanation of Codes

- 100: fuel cell system
- 11: liquid fuel (hydrocarbon material)
- 130: desulfurization unit
- 140: carburetor (steam mixer)
- 150: reformer
- 151: burner
- 152: reformer container
- 152A: inner cylindrical body
- 152B: outer cylindrical body
- 152C: reforming chamber
- 152D: reforming-catalyst layer
- 152E: inflow space
- 152G: reforming-filler layer
- 153: circulation portion
- 153A: feed pipe
- 153B: return pipe
- 153C: double-pipe portion
- 153D: material-gas feeder
- 153E: reformate outflow portion
- 155: CO transformer unit (CO transformer)
- 156: CO selective-oxidation unit (CO remover)
- 160: heat exchanger (steam generator)
- 161A: water-circulating pipe
- 200: fuel cell
- 300: .reformer unit
- 326: heaving portion (radiation pipe)
- 327: radiation portion (rectifier pipe)
- 327A: closure plate
- 327B: cylindrical leg (mounting portion)
- 327C: turbulence portion
- 152D: support

### Best Mode for Carrying Out the Invention

### [First Exemplary Embodiment]

A first exemplary embodiment of a fuel cell system according to the invention will be described below.
While the fuel cell system of this first exemplary embodiment exemplarily includes a reformer unit having a reformer according to the invention, the reformer unit or the reformer is not limitedly configured for use in such a fuel cell system but may be configured as, for instance, a hydrogen-gas manufacturing apparatus for single use. Further, while a liquid fuel is exemplarily used as a material gas for mixture with steam, the material gas is not limitedly prepared by use of such a liquid fuel but may be prepared by mixing steam to a hydrocarbon material gas such as liquefied petroleum gas and city gas. In short, various hydrocarbon material gases are also usable. Moreover, while the fuel cell system is exemplarily configured as a household system, the fuel cell system may alternatively be configured as a comparatively large system for use in, for instance, collective housing or various stores.

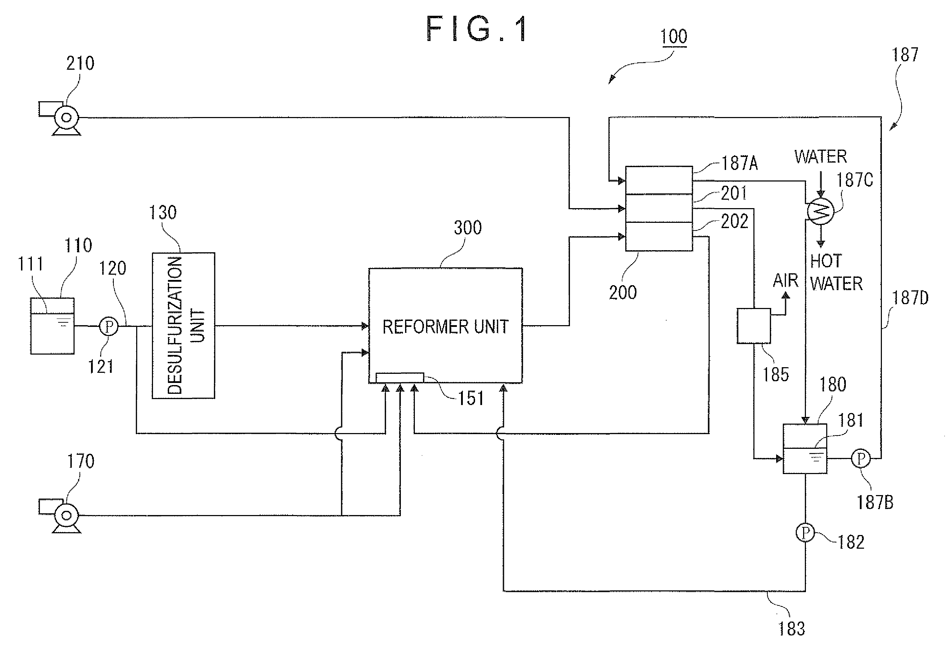

Fig. 1 is a block diagram schematically showing an arrangement of the fuel cell system according to this exemplary embodiment. For the convenience of explanation, Fig. 1 shows each component of the reformer unit as a separate block.

### [Arrangement of Fuel Cell System]

### (Overall Arrangement)

In Fig. 1, the fuel cell system, which is denoted by the numeral 100, is a system for reforming, for instance, a liquid fuel into a fuel gas of which primary component is hydrogen and for generating electricity with a fuel cell 200.
The fuel cell system 100 includes a liquid-fuel storage tank 110 for storing a liquid fuel 111 such as kerosene. The liquid fuel 111 is not limited to kerosene but may be any other liquid fuel such as light oil or naphtha. The liquid-fuel storage tank 110 is connected with a desulfurization unit 130 via a fuel transfer path 120 having a liquid-fuel pump 121 for transferring the liquid fuel 111.
The desulfurization unit 130 desulfurizes the liquid fuel 111 fed from the liquid-fuel storage tank 110 through the fuel transfer path 120 exemplarily at a speed of approximately 300 [ml/hour]. Specifically, the desulfurization unit 130 absorbs and removes sulfur compounds contained in the liquid fuel 111 by liquid-phase adsorption while heating the liquid fuel 111 with an electric heater or the like. The desulfurization unit 130 is connected with a reformer unit 300 having a reformer via a carburetor 140 (steam mixer).
The desulfurization unit 130 desulfurizes the liquid fuel 111 fed from the liquid-fuel storage tank 110 through the fuel transfer path 120 exemplarily at a speed of approximately 300 [ml/hour]. Specifically, the desulfurization unit 130 absorbs and removes sulfur compounds contained in the liquid fuel 111 by liquid-phase adsorption while heating with an electric heater or the like. The desulfurization unit 130 is connected with the reformer unit 300.

The reformer unit 300, a detail of which will be described later, includes a carburetor (steam mixer), a heat exchanger (steam generator), a reformer, a CO transformer unit (CO transformer) and a CO selective-oxidation unit (CO remover).
The carburetor is connected to the desulfurization unit 130 to accept inflow of the desulfurized liquid fuel 111. The carburetor is also connected with the heat exchanger. The carburetor mixes the steam fed from the heat exchanger to the liquid fuel 111 outflowing from the desulfurization unit 130, and vaporizes the liquid fuel 111 to generate a vaporized liquid fuel as a material gas (mixture gas of the liquid fuel 111 and the steam).
The heat exchanger is connected with a pure water tank 180 for storing pure water 181 via a water-feeding path 183 having a transfer pump 182, and fed with the pure water 181 from the pure water tank 180. The heat exchanger cools an exhaust gas exhausted from the reformer with the fed pure water 181 and generates steam so as to feed the generated steam to the carburetor. The pure water tank 180, which stores the pure water 181 containing no impurities such as distilled water, may be provided with, for instance, an arrangement for suitably receiving a supply of purified tap water or the like.
The carburetor and the heat exchanger, details of which will be described later, are exemplarily integrated with the reformer (i.e., integrated in the reformer unit 300 as an integral unit), but may be configured differently.

The reformer reforms the vaporized liquid fuel (i.e., the liquid fuel having been sulfurized, mixed with steam and vaporized) into a hydrogen-rich fuel gas. The reformer internally includes a reforming catalyst (not shown) such as Ru-Mn base catalyst or nickel catalyst and a burner 151 (heater). The heater is not limited to the burner 151 but may be any other heating device such as an electric heater.
The burner 151 is fed with the liquid fuel 111 from the liquid-fuel storage tank 110 through a branched fuel transfer path 120 and also with the fuel gas exited from the later-described fuel cell 200. The burner 151 combusts the liquid fuel 111 and the fuel gas with air fed from an air-feeding blower 170, and the vaporized liquid fuel is steam-reformed into the hydrogen-rich fuel gas with heat produced by the combustion.
A high-temperature exhaust gas (heating gas) due to the combustion by the burner 151 is fed to the heat exchanger 160, cooled by heat exchange with water and exhausted to the outside.

The reformer of the reformer unit 300 is connected with a CO transformer unit (CO transformer) and a CO selective-oxidation unit (CO remover) linearly.
The CO transformer unit, which is filled with a CO-transforming catalyst, transforms carbon monoxide contained in the hydrogen-rich fuel gas outflowing from the reformer.
The CO selective-oxidation unit, which is filled with a CO-selective oxidation catalyst, oxidizes CO into carbon dioxide (CO₂) with the CO transformer unit so as to remove CO in the fuel gas.
The CO transformer unit and the CO selective-oxidation unit, details of which will be described later, are exemplarily integrated with the reformer (i.e., integrated in the reformer unit 300 as an integral unit), but may be configured differently. In addition to the CO transformer unit and the CO selective-oxidation unit, an apparatus for absorbing and removing CO may be provided.

The CO selective-oxidation unit is connected with the fuel cell 200.
The fuel cell 200 generates direct-current power by reacting hydrogen with oxygen. The fuel cell 200, which is exemplarily a proton-exchange membrane fuel cell, includes a positive electrode 201, a negative electrode 202 and a polyelectrolyte membrane (not shown) provided between the positive electrode 201 and the negative electrode 202. The fuel cell 200 is fed with air suitably humidified by a humidifier (not shown) or the like at the side of the positive electrode 201 while being fed with the hydrogen-rich fuel gas generated in the reformer unit 300 at the side of the negative electrode 202. Water (pure water 181) is generated with the reaction of hydrogen in the fuel gas and oxygen in the air, and direct-current power is generated between the positive electrode 201 and the negative electrode 202.
The fuel gas fed from the reformer unit 300 may be suitably humidified by a humidifier or the like. The humidifier may be provided as, for instance, an independent system or a unit built in the fuel cell 200. In short, the humidifier may be used in any manner.
As described above, the fuel cell 200 is connected to the burner of the reformer at the side of the positive electrode 202, and feeds the burner with the residual hydrogen as a fuel for the burner. At the side of the positive electrode 201, the fuel cell 200 is connected with a separator 185. The separator 185, which is fed with the air used in the reaction from the side of the positive electrode 201, separates the gas-phase air and the liquid-phase water (pure water 181). The separated air is exhausted to the outside. The separator 185, which is connected with the pure water tank 180, supplies the separated water (pure water 181) to the pure water tank 180.

The fuel cell 200 is provided with a cooler 187. The cooler 187 includes a heat recovery apparatus 187A attached to the fuel cell 200. The heat recovery apparatus 187A is connected with the pure water tank 180 via a circulation path 187D having a pump 187B and a heat exchanger 187D.
With the driving of the pump 187B, the circulation path 187D circulates the pure water 181 between the heat recovery apparatus 187A and the pure water tank 180 to cool the fuel cell 200 heated in the course of power generation, and collects the heat.
The heat exchanger 187C conducts a heat exchange between the pure water 181 of which heat has been collected by the heat recovery apparatus 187A during the circulation and, for instance, tap water. The tap water warmed by the heat exchange is directly supplied to other facilities such as a bath for effective utilization. In addition to the heat exchange with the tap water, heat obtained from a heat exchange may be used for power generation or effectively used in other facilities.
The heat exchanger 187C is not limitedly arranged to conduct a heat exchange with a direct inflow of tap water, but may be arranged to conduct a heat exchange between the pure water 181 and tap water of which heat has been exchanged with the air flowing to the separator 185 from the positive electrode 201 of the fuel cell 200 by a heat exchanger (not shown).

The fuel cell system 100 includes a controller (not shown) for controlling operations of the overall system.
The controller controls a flow volume of the liquid fuel 11, power supplied to the electric heater (heat conditions of the heater of the desulfurization unit 130), combustion by the burner of the reformer, and a fed amount of the pure water 181 for generation of steam by the heat exchanger, and manages temperatures and production of electricity.

### (Reformer Unit)

Next, an arrangement of the reformer unit 300 of the above-described fuel cell system 100 will be described in detail.

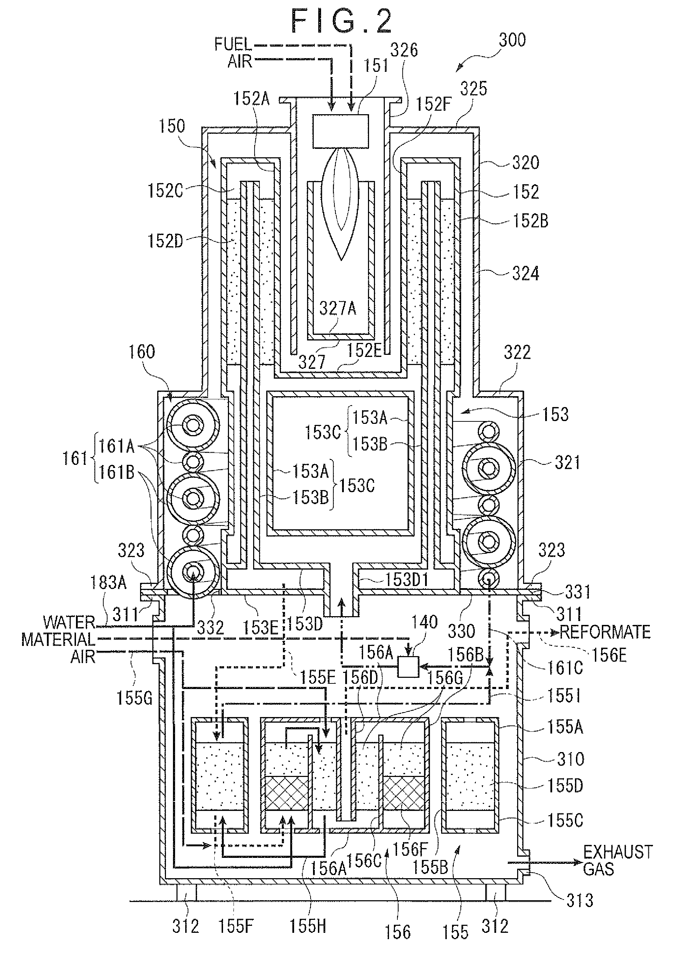

Fig. 2 is a conceptual diagram schematically showing an arrangement of the reformer unit.

As described above, the reformer unit 300 is configured as a unit that includes the carburetor, the reformer, the CO transform unit, the CO selective-oxidation unit and the heat exchanger.
As shown in Fig. 2, the reformer unit 300 includes: an upwardly-opening lower case 310; an upper case 320 detachably attached thereto while covering the upper face of the lower case 310; and a support mount 330. At least either one of inner surfaces or outer surfaces of the lower case 310 and the upper case 320 are provided with a heat insulator so as to be heat-insulated from the outside.
The lower case 310, which is shaped substantially in a bottom-having cylinder, includes a lower-mounting flange 311 that outwardly protrudes continuously from the upper opening thereof to define a flange shape. The lower case 310 includes mount legs 312 at its bottom, and the mount legs 312 are to be mounted, for instance, a floor or a bottom plate of a unit case (not shown). The lower portion of the lower case 310 is provided with a combustion-gas outlet 313 for exhausting the combustion gas generated by the burner 151 of the reformer 150. The combustion-gas outlet 313 may be provided with, for instance, an exhaust fan or a filter for blocking dust.
The upper case 320 has a substantially cylindrical large diameter portion 321. An upper axial end (one axial end) of the large diameter portion 321 is provided with a step portion 322 that continuously inwardly protrudes to define a flange shape. A lower axial end (the other axial end) of the large diameter portion 321 is provided with an upper-mounting flange 323 that continuously outwardly protrudes to define a flange shape. An inner circumference of the step portion 322 of the large diameter portion 321 is continuously provided with a substantially cylindrical small diameter portion 324 substantially coaxial with the large diameter portion 321. An upper axial end (one axial end) of the small diameter portion 324 is provided with a top plate 325 that continuously inwardly protrudes to define a flange shape. The top plate 325 is continuously provided with a substantially cylindrical heating portion 326 substantially coaxial with the large diameter portion 321.
The support mount 330, which is held between the lower-mounting flange 311 of the lower case 310 and the upper-mounting flange 323 of the upper case 320, includes a mounting plate 331 continuously coupled to the lower-mounting flange 311 and the upper-mounting flange 323 by a mounting member (not shown) such as a bolt and a nut. A plurality of communication holes 332 are bored in the support mount 330, through which the mutually-coupled upper and lower cases 320 and 310 are internally communicated with each other.

Within the upper case 320, the reformer 150 and the heat exchanger 160 are disposed.
The reformer 150 includes the burner 151, a reformer container 152 and a circulation portion 153.
The heat exchanger 160 includes a double-pipe heat-exchanging portion 161.
The reformer 150 and the heat exchanger 160 are exemplarily integrated together (i.e., integrated in the reformer unit 300 as an integral unit), but may be configured differently.

The burner 151 of the reformer 150, which is mounted on a burner mount base (not shown) mounted on an upper end (one end protruding from the upper end of the upper case 320) of the substantially cylindrical heating portion 326, is substantially located at the extension of the center axis of the heating portion 326. As described above, the burner 151 combusts the liquid fuel 111 and the fuel gas with air fed from the air-feeding blower 170, and heats the reformer 150.
A radiation portion 327 is disposed adjacent to an inner circumference of the heating portion 326. The radiation portion 327, which is shaped substantially in a bottom-having cylinder, is disposed substantially coaxially with the heating portion 326. For instance, the radiation portion 327 is mounted and fixed while being placed above an end surface of an inflow space 152E that serves as a bottom face of the reformer container 152. The bottom portion of the radiation portion 37 may be provided with holes or a mesh so that the combustion gas of the burner 151 is partially circulatable.

The reformer container 152 of the reformer 150, which includes an inner cylindrical body 152A and an outer cylindrical body 152B having different diameters and being substantially coaxial with each other, is shaped in a substantially annular cylinder in which a reforming chamber 152C of a substantially annular space is defined between the inner cylindrical body 152A and the outer cylindrical body 152B, and located within the small diameter portion 324 of the upper case 320. The reformer container 152 is not limitedly structured to include the simply cylindrical inner cylindrical body 152A and outer cylindrical body 152B, but may be structured to include, for instance, square tube or circumferentially wavy inner cylindrical body 152A and outer cylindrical body 152B. In short, the inner cylindrical body 152A and outer cylindrical body 152B may be of any shape as long as a substantially annular cylindrical inner space is defined.
Within the reformer container 152, a reforming catalyst layer 152D is defined by breathable reformer partitions (not shown) with a reforming catalyst being filled therein. The reformer partitions are not limited to netted members, but may be any other members. For instance, the reformer partitions may be filled with alumina grains.
The lower axial end of the reformer container 152 is integrally provided with a substantially cylindrical inflow space 152E in which a substantially columnar space is defined. With the inflow space 152E, the bottom-having cylindrical inner cylindrical body 152A and the bottom-having cylindrical outer cylindrical body 152B are substantially coaxially positioned while facing each other at the bottom with a predetermined space interposed for defining substantially columnar spaces, thereby shaping the reformer container 152 in a bottom-having annular cylinder. An inner circumference of the bottom-having annular cylindrical reformer container 152 defines a heating chamber 152F. The lower axial end of the reformer container 152 is integrally provided with the circulation portion 153.

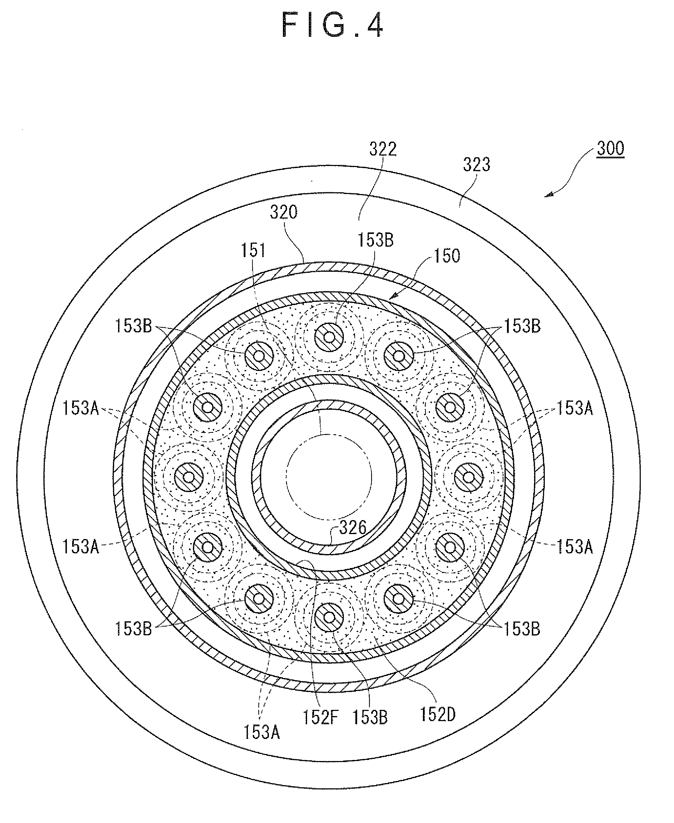

The circulation portion 153 inlets the material gas into the reformer container 152 and lets out the generated reformate (i.e., collects the reformate). As shown in Figs. 2 and 4, the circulation portion 153 includes a plurality of double-pipe portions 153C that each have a double-pipe structure including a feed pipe 153A and a return pipe 153B coaxially fitted into the feed pipe 153A. The double-pipe portions 153C each are connected to the lower axial end of the reformer container 152 and positioned within the large diameter portion 321 of the upper case.
First axial ends of the plurality of feed pipes 153A are connected substantially equiangularly to the vicinity of the outer circumference of the inflow space 152E of the reformer container 152, i.e., connected substantially equiangularly to positions corresponding to the reforming-catalyst layer 152D. The return pipes 153B are disposed such that their first axial ends penetrate the reforming-catalyst layer 152D and open in the vicinity of the upper axial end (first axial end) of the reforming chamber 152C for the reformate to flow thereinto while their second axial ends protrude from the feed pipes 153A by a predetermined amount.
In this manner, the plurality of double-pipe portions 153C are connected substantially equiangularly to the vicinity of the outer circumference of the inflow space 152E of the reformer container 152, i.e., connected substantially equiangularly to the positions corresponding to the reforming-catalyst layer 152D. While Fig. 4 shows that sixteen double-pipe portions 153C are connected for the convenience of explanation, the number of the double-pipe portions 153C is not limited to sixteen. The number of the double-pipe portions 153C is preferably in a range from three to thirty two.
When the number of the double-pipe portions 153C is two or less, not only the heat exchange ratio is considerably reduced, but also the flow of the material gas may be drifted, so that the material gas may not contact the reforming catalyst with favorable efficiency. Thus, the reformate may not be favorably and efficiently generated. On the other hand, when the number of the double-pipe portions 153C is thirty three or more, the structure of the small reformer unit 300 particularly for household use may be complicated, thereby reducing manufacturability. Accordingly, the number of the double-pipe portions 153C is preferably in a range from three to thirty two.

The double-pipe portions 153C each are connected with a material-gas feeder 153D connected to the feed pipes 153A and with a reformate outflow portion 153E connected to the return pipe 153B.
The material-gas feeder 153D, which internally has a substantially columnar space, is shaped in a substantially circular cylinder having, for instance, substantially the same outer dimension as the outer dimension of the outer cylindrical body 153B (which substantially corresponds to the outer diameter of the reformer 150). Substantially the center of a lower axial end surface of the material-gas feeder 153D is provided with a material inflow portion 153D1 into which the material gas flows.
The reformate outflow portion 153E, which internally has a substantially columnar space, is shaped in a substantially circular cylinder having, for instance, substantially the same outer dimension as the outer dimension of the outer cylindrical body 153B (which corresponds to the outer diameter of the reformer container 152). The reformate outflow portion 153E is continuously integrated with an axial end of the material-gas feeder 153D opposite to the double-pipe portions 153C. The material inflow portion 153D1 of the material-gas feeder 153D penetrates the reformate outflow portion 153E to protrude from a lower end of the reformate outflow portion 153E.
The feed pipes 153A of the double-pipe portions 153C are connected to an axial end of the material-gas feeder 153D so as to communicate the reforming chamber 152C with the inside of the material-gas feeder 153D via the inflow space 152E.
The return pipes 153B of the double-pipe portions 153C penetrate the material-gas feeder 153D to be connected to an end of the reformate outflow portion 153E adjoining to the material-gas feeder 153D, thereby establishing a communication between a hollow portion of the reforming chamber 152C located adjacent to the upper axial end of the reforming catalyst layer 152D and the inside of the reformate outflow portion 153E.

As described above, the heating portion 326 is provided to the upper case 320 substantially coaxially with the reformer container 152 and positioned within the heating chamber 152F of the reformer container 152.
The radiation portion 327 is disposed adjacent to the inner circumference of the heating portion 326. The radiation portion 327, which is shaped substantially in a bottom-having cylinder, is disposed substantially coaxially with the heating portion 326. For instance, the radiation portion 327 is mounted and fixed while being placed above the end surface of the inflow space 152E that serves as the bottom face of the reformer container 152.

The heat-exchanging portion 161 has a double-pipe structure that includes: a water-circulating pipe 161A; and a steam-generating pipe 161B into which the water-circulating pipe 161A is substantially coaxially fitted.
A first end of the water-circulating pipe 161A is connected to a water-feeding pipe 183A of the water-feeding path 183, through which the pure water 181 flows into the water-circulating pipe 161A, while a second end of the water-circulating pipe 161A is opened within the steam-generating pipe 161 B. A first end of the steam-generating pipe 161B, where the second end of the water-circulating pipe 161A is opened, is closed while a second end of the steam-generating pipe 161B is connected to a steam-feeding pipe 161C of which first end is connected to the carburetor 140.
The heat-exchanging portion 161 is positioned in the large diameter portion 321 of the upper case 320 and helically disposed around the outer circumference of the circulation portion 153, i.e., the outer circumference of the disposition positions of the plurality of double-pipe portions 153C.

The reformer 150 connected with the circulation portion 153 and the heat exchanger 160 are mounted and fixed on the support mount 330 to be disposed within the upper case 320.
The combustion gas generated by the burner 151 provided in the heating portion 326 of the reformer 150 is circulated from the upper side to the lower side between the radiation portion 327 and the heating portion 326 to be further circulated from the lower side to the upper side between the heating portion 326 and the inner cylindrical body 152A of the reformer container 152. The combustion gas is further circulated from the upper side of the reformer container 152 to the lower side between the outer cylindrical body 152B of the reformer container 152 (i.e., the outer circumferential side of the reformer container 152) and the inner circumference of the small diameter portion 324 of the upper case 324, and flows into the large diameter portion 321. Then, the combustion gas flows into the lower case 310 through the communication hole 332 of the support mount 330 while heating the reformer 150 and the heat exchanger 160. The combustion gas having flown into the lower case 310 is exhausted from the combustion-gas outlet 313 of the lower end.

Within the lower case 310, the CO transformer unit 155 and the CO selective-oxidation unit 156 are disposed.
The CO transformer unit 155 is shaped in a substantially annular cylinder while the CO selective-oxidation unit 156 is shaped in a substantially hollow column. The CO selective-oxidation unit 156 is disposed coaxially with the CO transformer unit 155 and positioned adjacent to an inner circumference of the CO transformer unit 155.

The CO transformer unit 155 includes: a substantially cylindrical outer cylinder 155A; a substantially cylindrical inner cylinder 155B having a smaller diameter than the outer cylinder 155A; and a substantially annular cylindrical CO-transformer container 155C internally defining an annular space. The CO-transformer container 155C is not limitedly structured to include the simply cylindrical outer cylinder 155A and inner cylinder 155B, but may be structured to include, for instance, square tube or circumferentially wavy outer cylinder 155A and inner cylinder 155B. In short, the outer cylinder 155A and inner cylinder 155B may be of any shape as long as a substantially annular cylindrical inner space is defined. Within the CO-transformer container 155, a CO-transforming catalyst layer 155D is formed between a pair of breathable transformer partitions (not shown) with a CO-transforming catalyst being filled therein. Like the reformer partitions, the transformer partitions are not limited to netted members, but may be any other members. For instance, the transformer partitions may be filled with alumina grains.
A first axial end of the CO-transformer container 155C is connected with a reformate-circulating portion 155E connected to the reformer 150 for circulating the reformate outflowing from the reformer 150, and internally provided with a reformate inflow portion (not shown) into which the reformate flows. A second axial end of the CO-transformer container 155C is connected with a shift-gas circulating portion 155F for ejecting to the outside the reformate having been circulated and processed through the CO-transforming catalyst layer 155D. The shift-gas circulating portion 155F is connected with an air-introducing pipe 155G. The air-introducing pipe 155G, of which first end is pulled out from the upper side of the lower case to be fed with air by the air-feeding blower 170 while its second end is connected to the shift-gas circulating portion 155F, feeds and mixes the air to the reformate outflowing from the CO transformer unit 155.
The CO transformer unit 155 is internally provided with a CO-transformer water pipe (not shown) serving as a water pipe in which water for conducting a heat exchange with the reformate circulated and processed through the CO-transforming catalyst layer 155D is circulated. A first end of the CO-transfonner water pipe is connected with a water-feeding connector pipe 155H in which the pure water 181 is circulatable. On the other hand, a second end of the CO-transformer water pipe is connected with a steam-feeding pipe 155I connected to the carburetor 140.

The CO selective-oxidation unit 156 includes a substantially cylindrical cylinder 156B of which both axial ends are closed with closure plates 156A, thereby defining a shape of a substantially hollow column. The cylinder 156B internally includes a cylindrical partition cylinder 156C disposed substantially coaxially with the cylinder 156B. An upper end (one axial end) of the partition cylinder 156C is spaced apart from an inner circumferential surface of the closure plate 156A while interposing a predetermined space, such that an outer circumferential side of the partition cylinder 156C can be communicated with an inner circumferential side of the partition cylinder 156C. The cylinder 156B internally includes an ejection pipe 156D disposed substantially coaxially with the cylinder 156B. An upper end (first axial end) of the ejection pipe 156D penetrates the closure plate 156A to be open to the outside while a lower end (second axial end) thereof is spaced apart from the other closure plate 156A with a predetermined space interposed. In other words, the lower end of the ejection pipe 156D is open in the cylinder 156B and capable of ejecting a gas having flown into the cylinder 156B to the outside. The ejection pipe 156D is connected with a reformate-ejecting pipe 156E. The reformate-ejecting pipe 156E, which is pulled out from the upper side of the lower case 310, ejects the reformate to the outside of the reformer unit 300. In other words, the reformate-ejecting pipe 156E supplies the reformate to the fuel cell 200 and humidifies the reformate.
Within the CO selective-oxidation unit 156, removal partitions (not shown) partitions an annular space provided on the outer circumferential side of the partition cylinder 156C into: a filler layer 156F filled with a filler and located adjacent to the lower end (second axial end); and a CO-selective-oxidizing catalyst layer 156G filled with a CO-selective oxidizing catalyst and located adjacent to the upper end (first axial end). Further within the CO selective-oxidation unit 156, removal partitions (not shown) partitions an annular space provided adjacent to the inner circumference of the partition cylinder 156C into a CO-selective-oxidizing catalyst layer 156G filled with a CO-selective oxidizing catalyst. Like the reformer partitions and the transformer partitions, the removal partitions are not limited to netted members, but may be any other members. For instance, the transformer partitions may be filled with alumina grains. Examples of the filler are various corrosion-resistant or heat-resistant members such as metals (e.g., wool-type stainless steel) and inorganic materials (e.g., alumina grains).
The CO selective-oxidation unit 156 internally includes a CO-selective-oxidation water pipe (not shown) serving as a water pipe in which water for conducting a heat exchange with the reformate circulated and processed through the filler layer 156F and the CO-selective-oxidizing catalyst layer 155G is circulated. A first end of the CO-selective-oxidation water pipe is connected with the second end of the water-feeding pipe 183A of the water-feeding path 183. On the other hand, a second end of the CO-selective-oxidation water pipe is connected with the water-feeding connector pipe 155H connected to the CO-transformer water pipe. The water fed through the water-feeding pipe 183A flows into the CO-selective-oxidation water pipe to be heated through the heat exchange with the reformate, and then flows into the CO-transformer water pipe through the water-feeding connector pipe 155H to be further heated into steam. The steam is then fed to the carburetor 140.

### [Operation(s) of Fuel Cell System]

Next, power generation operation(s) of the above-described fuel cell system 100 will be described.

First of all, when acquiring a signal related to a request for power generation, the controller controls the burner 151 to be fed with the liquid fuel 111 and air for heating the reformer 150 exemplarily up to approximately 700 degrees C. The controller drives the transfer pump 182 to feed the heat exchanger 160 with the pure water 181 stored in the pure water tank 180 through the water-feeding path 183 for generation of steam, and controls the carburetor 140 to be fed with the steam. Then, the controller controls the electric heater of the desulfurization unit 130 to be heated, and drives the liquid-fuel pump 121 to feed the desulfurization unit 130 with the liquid fuel 111 from the liquid-fuel storage tank 110 exemplarily at approximately 300 [ml/hour].
The liquid fuel 111 fed to the desulfurization unit 130 flows into a desulfurization agent container to undergo desulfurization while being heated with its flow rate distribution at a cross section of a desulfurizing-catalyst layer (not shown) being substantially uniform. The desulfurizing-catalyst layer is formed by filling a desulfurizing catalyst in the desulfurization agent container. Then, the carburetor 140 mixes the desulfurized liquid fuel 111 with the steam fed from the heat exchanger 160 and vaporizes the liquid fuel 111, so that the generated gas is fed to the reformer 150 as the vaporized liquid fuel. Then, the reformer 150 reforms the vaporized liquid fuel into the hydrogen-rich fuel gas, so that the CO transformer unit 155 and the CO selective-oxidation unit 156 transforms and removes CO contained in the fuel gas. After suitably humidified by, for instance, a humidifier, the fuel gas is fed to the negative electrode 202 of the fuel cell 200.
Subsequently, hydrogen in the fuel gas fed to the negative electrode 202 reacts with oxygen in the air having been suitably humidified by a humidifier and fed to the fuel cell 200 for water generation, and generates direct-current power between the positive electrode 201 and the negative electrode 202.
The fuel gas containing the hydrogen residual at the negative electrode 202 is fed to the burner 151 of the reformer 150 for combustion.

### [Advantage(s) of Fuel Cell System]

(1) As described above, the reformer 150 of the first exemplary embodiment includes the reformer container 152 in which the reforming chamber 152C of a substantially annular space to be filled with the reforming catalyst is defined between: the inner cylindrical body 152A in which the burner 151 is positioned substantially on the center axis; and the outer cylindrical body 152B having a different diameter from the inner cylindrical body 152A and disposed substantially coaxially with the inner cylindrical body 152A.
In addition, the feed pipes 153A for feeding the material gas containing the liquid fuel (hydrocarbon material) mixed with steam and vaporized by the carburetor 140 to the first axial end of the reforming chamber 152C of the reformer container 152 are connected to the first axial end of the reformer container 152. In addition, the return pipes 153B substantially coaxially fitted into the feed pipes 153A are disposed such that their first ends penetrate and open in the reforming chamber 152C so as to allow the reformate generated in the vicinity of the second axial end of the reforming chamber 152C to flow thereinto. The circulation portion 153 is arranged to include the plurality of double-pipe portions 153C structured as above.
With this arrangement, for instance, in feeding the fuel cell 200 with the reformate for use therein as hydrogen gas, a space necessary for filling the reforming catalyst in an amount corresponding to the desired amount of the reformate can be comparatively easily secured. Thus, it is only required to fill the reforming catalyst in the substantially annular space, thereby enhancing the workability. In addition, the feed pipes 153A for feeding the material gas to the reforming chamber 152C and the return pipes 153B for circulating and collecting the reformate generated by the reforming catalyst in the reforming chamber 152C provide the plurality of double-pipe portions 153C having a substantially coaxial double-pipe structure, thereby forming the circulation portion 153. Thus, the structure for feeding the material gas and the structure for collecting the reformate are collectively arranged on a first side of the reformer container 152, so that these structures cause less interference with the heat insulation or other structures of the reformer container 152. Accordingly, the reformer unit 300 can be easily downsized structurally. Further, the material gas fed by the feed pipes 153A is heated by the reformate having been heated up to a predetermined temperature during its generation when the reformate is circulated through the return pipes 153B fitted into the feed pipes 153A, thereby contributing to favorable heat efficiency.

(2) The second ends of the feed pipes 153A, of which first ends are connected to the first axial end of the reformer container 152, are connected to the material-gas feeder 153D internally having a substantially columnar space into which the material gas flows. In addition, the second ends of the return pipes 153B, of which first ends are opened in the vicinity of the second end of the reforming chamber 152C, penetrate the material-gas feeder 153D to be connected to the reformate outflow portion 153E adjoining to the material-gas feeder 153D and internally having a substantially columnar space into which the reformate flows.
Accordingly, in feeding the material gas into the reforming chamber 152C and collecting the reformate reformed and generated in the reforming chamber 152C, the material gas and the reformate can be substantially uniformly circulated without drifting, and the filled reforming catalyst can be evenly used for reforming treatment. Additionally, a heat exchange between the material gas and the reformate can be conducted at enhanced efficiency. Thus, the reforming treatment can be efficiently and favorably conducted.

(3) The material-gas feeder 153D connected with the feed pipes 153A for feeding the material gas and the reformate outflow portion 153E connected with the return pipes 153B for accepting the inflow of the reformate generated in the reforming chamber 152C are shaped substantially in a cylinder having substantially the same diameter to be continuously integrated with each other.
Since the material-gas feeder 153D and the reformate outflow portion 153E, which have substantially columnar spaces, are continuously integrated to have substantially the same diameter, the material-gas feeder 153D and the reformate outflow portion 153E are continuously formable, for instance, by axially partitioning a tubular member. Thus, simplification of the structure and enhancement of manufacturability can be easily realized. Furthermore, by continuously forming, for instance, the material-gas feeder 153D and the reformate outflow portion 153E from the outer cylindrical body 152B of the reformer container 152 to have the same diameter as the outer cylindrical body 152B, further simplification of the structure and further enhancement of manufacturability can be realized. Thus, a system configuration with other members can be facilitated, which also facilitates a downsizing of a system configuration. Such a continuous formation can also facilitate a formation of an integral structure for supporting the reformer container 152 in which the material-gas feeder 153D and the reformate outflow portion 153E serve as a mount while the circulation portion 153 serves as a support leg. Thus, a system configuration can be further facilitated.
The material inflow portion 153D1 provided substantially at the center of the material-gas feeder 153D fed with the material gas penetrates the reformate outflow portion 153E to protrude from the lower end of the reformate outflow portion 153E.
With this arrangement, the fed material gas flows into the material-gas feeder 153D and circumferentially circulates therein to flow into the feed pipes 153A, so that the material gas can be more favorably circulated without drifting.

(4) In the reformer container 152, the inflow space 152E of a substantially columnar space filled with no reforming catalyst is defined in the vicinity of the first axial end of the reformer container 152 connected with the feed pipes 153A of the circulation portion 153.
With this arrangement, the material gas to be fed into the reforming chamber 152C from the feed pipes 153A initially flows into the inflow space 152E of a substantially columnar space, so that the material gas substantially uniformly flows through the layer of the filled reforming catalyst. Thus, the material gas can more uniformly contact the reforming catalyst without drifting, so that a reforming treatment can be more favorably conducted.

(5) The unit configuration of the reformer unit 300 integrates together: the reformer 150; the heat exchanging portion 161, the CO-transformer water pipe and the CO-selective-oxidation water pipe for generating steam from the water fed from the water-feeding pie 183A with the heat of the burner 151 in the reformer container 150; and the carburetor 140 for generating the material gas to be reformed in the reformer by mixing the separately desulfurized liquid fuel with the generated steam and vaporizing the liquid fuel.
With this arrangement, the heat generated in the reforming treatment of the material gas in the reformer 150 can be effectively used in the structure for generating the steam to be mixed for use in the reforming treatment and the structure for mixing such steam. Thus, heat efficiency can be further enhanced, and a reforming treatment can be efficiently and favorably conducted.

(6) Besides the reformer 150, the unit configuration further includes the CO-transformer unit 155 and the CO selective-oxidation unit 156.
With this arrangement, the reformate having been reformed in the reformer 150 can be immediately processed in the CO-transformer unit 155 and the CO selective-oxidation unit 156 for feeding the reformate to, for instance, the fuel cell 200 as hydrogen gas in a facilitated manner. Such unitization can also facilitate application to household use and downsizing. As described above, the reformer unit 300 also integrates the heat exchanger 161, the CO-transformer water pipe, the CO-selective-oxidation water pipe and the carburetor 140 together. Thus, favorable heat efficiency can be easily obtained, and downsizing can be easily realized.

(7) The CO-transformer unit 155 is shaped substantially in an annular cylinder, and the CO selective-oxidation unit 156 is disposed interior to the CO-transformer unit 155 such that its axis extends along a substantially vertical direction. In addition, the reformer 150 is located upward in the vertical direction, and the reformer container 152 is disposed such that its axis extends along a substantially vertical direction.
With this arrangement, the unit can be easily sized to have the reduced radial dimension and the reduced height dimension, and a small structure for household use can be easily obtained. Moreover, since the structure for feeding the material gas and the structure for collecting the generated reformate (i.e., the circulation portion 153) are provided on the lower end (axial end) of the reformer 150, the reformate-circulating portion 155E for feeding the reformate to the CO-transformer unit 155 and the CO selective-oxidation unit 156 can be easily formed and shortened. The shorter reformate-circulating portion 155E can contribute to more reduction in heat loss, thereby facilitating further enhancement of heat efficiency.

(8) The structure for generating steam includes not only the heat exchanger 161 but also the CO-transformer water pipe for a heat exchange in the CO-transformer unit 155 and the CO-selective-oxidation water pipe for a heat exchange in the CO selective-oxidation unit 156.
With this arrangement, the structure for cooling the high-temperature reformate collected from the return pipes 153B for CO transformation and CO removal can also serve as the structure for generating steam to be mixed with the separately desulfurized liquid fuel for use in preparing the material gas. Thus, further simplification of the structure and further enhancement of heat efficiency can be realized. Incidentally, by disposing the CO-transformer water pipe and the CO-selective-oxidation water pipe externally to the CO-transformer unit 155 and the CO selective-oxidation unit 156, the water pipes can also serve as heat insulator. Further downsizing of the unit configuration can be easily realized.

(9) The reformer unit 300 including the above-described reformer 150 is used in the fuel cell system 100.
Accordingly, a small system configuration capable of efficient and stable power generation can be provided, and application to a household use can be facilitated. Thus, expansion of use can be easily realized.

### [Second Exemplary Embodiment]

A second exemplary embodiment of a fuel cell system according to the invention will be described below.
In this second exemplary embodiment, description duplicated in the first exemplary embodiment will be simplified or omitted.

### [Arrangement of Fuel Cell System]

### (Overall Arrangement)

The overall arrangement of the fuel cell system according to this second exemplary embodiment is the same as the first exemplary embodiment, description of which is omitted.

### (Reformer Unit)

Next, an arrangement of the reformer, unit 300 of the above-described fuel cell system 100 according to the second exemplary embodiment will be described.
Fig. 2 is a conceptual diagram schematically showing an arrangement the reformer unit.

As in the first exemplary embodiment, the reformer unit 300 according to the second exemplary embodiment is configured as a unit that includes the carburetor 140, the reformer 150, the CO transform unit 155, the CO selective-oxidation unit 156 and the heat exchanger 160.
In the reformer unit of the second exemplary embodiment, the substantially cylindrical heating portion 326 (radiation pipe) substantially coaxial with the large diameter portion 321 is provided continuously on the top plate 325 of the upper case 320 such that the upper end (axial end) of the heating portion 326 upwardly protrude.

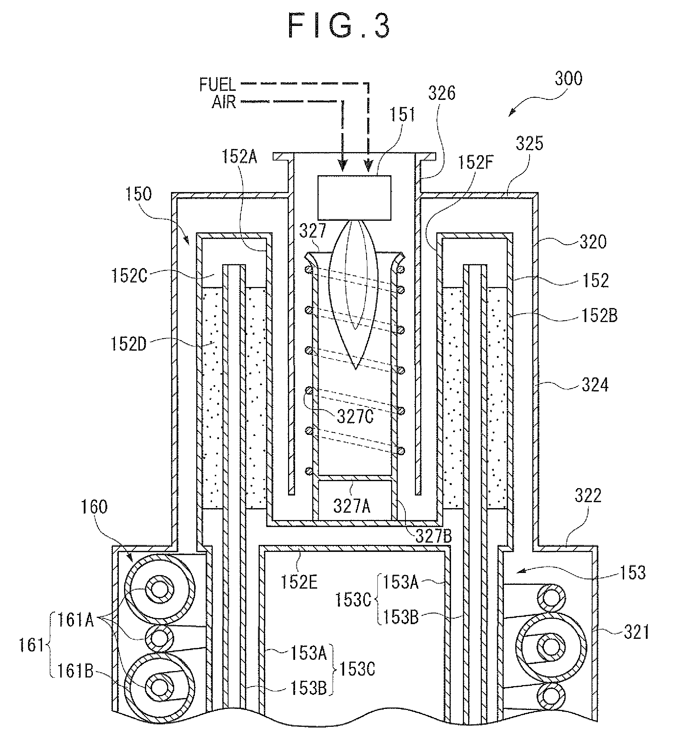

As in the first exemplary embodiment, the burner 151 of the reformer 150, which is mounted on a burner mount base (not shown) mounted on the upper end of the substantially cylindrical heating portion 326 protruding from the upper end of the upper case 320, is substantially located at the extension of the center axis of the heating portion 326 in the second exemplary embodiment. As described above, the burner 151 combusts the liquid fuel 111 and the fuel gas with air fed from the air-feeding blower 170, and heats the reformer 150.
In the second exemplary embodiment, the heating portion 326 is formed such that a length of its lower end (second end) located within the small diameter portion 324 substantially corresponds to a length of the reformer container 152.
The radiation portion 327 (rectifier pipe) is disposed adjacent to the inner circumference of the heating portion 326. The radiation portion 327, which is shaped in a substantially bottom-having cylinder of which first axial end is closed by the closure plate 327A, is formed such that its length substantially corresponds to the later-described reforming-catalyst layer 152D in the reformer container 152. As shown in Fig. 3, an upper end (second axial end) of the radiation portion 327 is formed to be gradually widened upwardly.
While the closure plate 327A is exemplarily shaped in a plate through which no combustion gas of the burner 151 is circulatable, the closure plate 327A may be of any other shape. For instance, the closure plate 327A may have a hole through which the combustion gas partially is circulatable, or the closure plate 327A may be configured as a mesh. In other words, the closure plate 327A provides circulation resistance against the combustion gas that flows within the radiation portion 327 (rectifier pipe) from the side of the burner 151 to the second end so that the combustion gas from the burner 151 at least partially flows between an outer circumference of the radiation portion 327 and an inner circumference of the heating portion 326 (radiation pipe). Accordingly, the closure plate 327A is preferably completely closed. However, depending on levels of circulation resistance between the radiation portion 327 and the heating portion 326 and heating degrees of the radiation portion 327 and the heating portion 326, the closure plate 327A may be provided with a hole so that the combustion gas is partially circulatable from the closure plate 327A though the hole.
As shown in Fig. 3, the first axial end of the radiation portion 327 is continuously provided with a substantially-cylindrical cylindrical leg 327B (mounting portion). The radiation portion 327 is disposed substantially coaxially with the heating portion 326. For instance, the radiation portion 327 is mounted and fixed such that the cylindrical leg 327B is placed on the end surface of the inflow space 152E that serves as the bottom face of the reformer container 152. The radiation portion 327 is disposed so as not to be located adjacent to the inner circumference side of the reforming catalyst layer 152D at the axially-lower end of the reforming catalyst layer 152D. Specifically, although a detail will be described later, for suppression of overheating, the radiation portion 327 is placed (i.e., mounted and fixed) on the inflow space 152E so as not to be located on an upper-stream side of a circulation direction in which the material gas introduced from the lower end of the reforming catalyst 152D is axially upwardly circulated for the reforming treatment. The mounting portion is not limited to the cylindrical leg 327B shaped in a cylinder having the same diameter, but may be of any other configuration. For instance, the mounting portion may be of configuration in which a plurality of rod-shaped members are coaxially provided. In short, the radiation portion 327 may be disposed in any manner.
As shown in Fig. 3, the outer circumference of the radiation portion 327 is integrally provided with a turbulence portion 327C formed from an elongated steel product and disposed helically around the center axis. The turbulence portion 327C is out of contact with the inner circumference of the heating portion 326, and formed such that the combustion gas of the burner 151 circulated between the outer circumference of the radiation portion 327 and the inner circumference of the heating portion 326 is circulated helically around the center axis. While Fig. 3 shows the turbulence portion 237C formed from a strip of an elongated steel product for the convenience of description, the turbulence portion 237C may be of any other shape. For instance, the turbulence portion 237C may be formed from plural strips, protrude from the outer circumference of the radiation portion 327 while exhibiting a wavy cross section, or bulge to define a rib shape. Further alternatively, the turbulence portion 237C may be of a combination shape of the above with an elongated steel product.

### [Operation(s) of Fuel Cell System]

Next, power generation operation(s) of the above-described fuel cell system 100 according to the second exemplary embodiment will be described.

First of all, when acquiring a signal related to a request for power generation, the controller controls the burner 151 to be fed with the liquid fuel 111 and air for heating the reformer 150 exemplarily up to approximately 700 degrees C. The combustion gas of the burner 151 passes through between the outer circumference of the radiation portion 327 and the inner circumference of the heating portion 326 downwardly from the widened upper end while heating the radiation portion 327 by flowing into the inner circumferential side of the opposed radiation portion 327. At the time of this passage, the combustion gas flows therethrough helically around the center axis of the reformer container 150 due to the turbulence portion 327C. The passage of the combustion gas heats the radiation portion 327 and the heating portion 326. The combustion gas is further circulated upwardly from the lower end of the heating portion 326 between the outer circumference of the heating portion 326 and the inner circumference of the reformer container 152 to heat the heating portion 326 and the reformer container 152. The combustion gas having flown to the upper side of the reformer container 152 passes through the outer circumferential side of the reformer container 152 to flow into the large diameter portion 321.
With this operation, the reformer container 150 and the heat exchanger 160 are heated. The controller drives the transfer pump 182 to feed the heat exchanger 160 with the pure water 181 stored in the pure water tank 180 through the water-feeding path 183 for generation of steam, and controls the carburetor 140 to be fed with the steam. Then, the controller controls the electric heater of the desulfurization unit 130 to be heated, and drives the liquid-fuel pump 121 to feed the desulfurization unit 130 with the liquid fuel 111 from the liquid-fuel storage tank 110 exemplarily at approximately 300 [ml/hour].

The liquid fuel 111 fed to the desulfurization unit 130 flows into a desulfurization agent container to undergo desulfurization while being heated with its flow rate distribution at a cross section of a desulfurizing-catalyst layer (not shown) being substantially uniform. The desulfurizing-catalyst layer is formed by filling a desulfurizing catalyst in the desulfurization agent container. Then, the carburetor 140 mixes the desulfurized liquid fuel 111 with the steam fed from the heat exchanger 160 and vaporizes the liquid fuel 111, so that the generated gas is fed to the reformer 150 as the vaporized liquid fuel. Subsequently, the vaporized liquid fuel is reformed by the reformer 150 into hydrogen-rich fuel gas.
In the circulation of the combustion gas of the burner 151 in the reformer container 150, the heated radiation portion 327 heats the reformer container 152 with radiation heat via the heating portion 326 exemplarily up to approximately 700 degrees C. Since the radiation portion 327 is not located at the lower end of the reforming-catalyst layer 152D of the reformer container 152, i.e., the closure plate 327A of the radiation portion 327 is located higher than the lower end of the reforming-catalyst layer 152D of the reformer container 152, the radiation heat of the radiation portion 327 is less influential over the heating at the downstream side of the reforming-catalyst layer 152D. Accordingly, the lower end of the reforming-catalyst layer 152D, from which the material gas is introduced, maintains its temperature to be more or less lower than that of the upper end, so that overheating can be suppressed. Thus, the material gas introduced in the lower end of the reforming-catalyst layer 152D can be subjected to the reforming treatment throughout substantially the entire axial region of the reforming-catalyst layer 152D. thereby contributing to an efficient and stable treatment.

The CO transformer unit 155 and the CO selective-oxidation unit 156 transform and remove CO contained in the fuel gas generated by the reforming treatment at the reformer 150, and the fuel gas is then fed to the fuel cell 200 from the reformer unit 300.
Further, the fuel gas fed to the fuel cell 200 is suitably humidified by, for instance, a humidifier, and then fed to the negative electrode 202 of the fuel cell 200. Subsequently, hydrogen in the fuel gas fed to the negative electrode 202 reacts with oxygen in the air having been suitably humidified and fed to the fuel cell 200 for water generation, and generates direct-current power between the positive electrode 201 and the negative electrode 202.
The fuel gas containing the hydrogen residual at the negative electrode 202 is fed to the burner 151 of the reformer 150 for combustion.

### [Advantage(s) of Fuel Cell System]

The second exemplary embodiment provides the following advantages (10) to (16) in addition to the advantages (1) to (3) and (5) to (9) provided by the fuel cell system of the first exemplary embodiment.

(10) As described above, in the reformer 150 according to the second exemplary embodiment, the heating portion 326 shaped in a cylinder having a smaller diameter than the inner cylindrical body 152A of the reformer container 152 is substantially coaxially disposed adjacent to the inner circumference of the inner cylindrical body 152A while the burner 151 is disposed adjacent to the inner circumference of the heating portion 326 at a position substantially corresponding to the first axial end of the reforming chamber 152C of the reformer container 152. In addition, the radiation portion 327, which is shaped in a bottom-having cylinder having a smaller diameter than the heating portion 326 and having its first axial end opposite to the burner 151 closed by the closure plate 327A, is substantially coaxially disposed adjacent to the inner circumference of the heating portion 326 in such a manner that the combustion gas of the burner 151 is circulatable between the outer circumference of the radiation portion 327 and the inner circumference of the heating portion 326.
With this arrangement, the combustion gas of the burner 151 flows into the inner circumferential side of the radiation portion 327 from the second end thereof (end not closed by the closure plate 327A) and flows out of the inner circumferential side in a turning-back manner. Then, the combustion gas is circulated between the radiation portion 327 and the heating portion 326.
Thus, while the radiant potion 327 is heated, the heating portion 326 located adjacent to the inner circumference of the reformer container 152 can be efficiently heated. In addition, the heat from the radiation portion 327 also heats the reformer container 152 via the heated heating portion 326, so that temperature dispersion in the axial direction of the reformer container 152 can be suppressed. Accordingly, heating can be efficiently conducted and the reforming treatment of the material gas can be stably conducted. Further, the heating portion 326 arranged to support the burner 151 is usable. Thus, by simply providing the cylindrical radiation portion 327, the reformer container 152 can be stably heated.

(11) According to the second exemplary embodiment, in the reformer container 152 disposed such that its center axis extends substantially in the vertical direction, the burner 151 is disposed such that the fuel gas flows substantially downwardly in the vertical direction, and the radiation portion 327 is disposed to upwardly open (i.e., disposed such that its first end closed by the closure plate 327A is located downward in the axial direction).
With this arrangement, dripping from the burner 151, condensation on the radiation portion 327 at the time of shutdown and the like can be prevented from entering the burner 151. Thus, clogging and damages of the burner 151 due to dripping can be prevented, and stable generation of combustion gas and stable operations can be easily realized.

(12) According to the second exemplary embodiment, the first axial end of the reformer container 152, to which the feed pipes 153A of the circulation portion 153 are connected, are provided with the material-gas feeder 153D internally having a substantially columnar space into which the material gas flows in. The cylindrical leg 327B provided on the radiation portion 327 is placed (e.g., mounted and fixed) on the material-gas feeder 153D such that the radiation portion 327 is upwardly open.
With this arrangement, the material gas to be fed into the reforming chamber 152C from the feed pipes 153A initially flows into the material-gas feeder 153D of a substantially columnar space, so that the material gas substantially uniformly flows through the reforming-catalyst layer 152D. Thus, the material gas can more uniformly contact the reforming catalyst without drifting, so that a reforming treatment can be more favorably conducted. In addition, the material-gas feeder 153D simply structured to have a substantially columnar space for circulating the material gas into the reforming-catalyst layer 152D without drifting can be used together with a structure for disposing the radiation portion 327 simply with the cylinder leg 327B. Thus, structural simplification and enhancement of manufacturability can be easily realized. Particularly, the cylindrically-structured cylindrical leg 327B is continuously provided on the radiation portion 327. Thus, since a simple structure is usable, further structural simplification and further enhancement of manufacturability can be easily realized.

(13) In the reformer container fed with the material gas by the circulation portion 153 such that the material gas is circulated substantially along the axial direction within the reforming chamber 152C for outputting the reformate, the radiation portion 327 is disposed so as not to be opposed to the lower end of the inner cylindrical body 152A (i.e., upstream side of the material gas circulated within the reforming chamber 15C). In other words, the radiation portion 327 is disposed so as not to be located at the upstream side of the material gas circulation where the lower end of the reforming-catalyst layer 152D is located.
With this arrangement, the radiation heat from the radiation portion heated by the burner 151 becomes less influential over the upstream side of the material gas circulation, thereby preventing overheating of the reforming chamber 152C at the upstream side of the material gas circulation. Thus, the entirety of the reforming-catalyst layer 152C of the reforming chamber 152C can provide a substantially uniform and stable reforming treatment, and an efficient reforming treatment can be easily obtained with a simplified arrangement.

(14) According to the second exemplary embodiment, the turbulence portion 327C is provided helically around the center axis between the inner circumference of the heating portion 326 and the outer circumference of the radiation portion 327.
With this arrangement, the fuel gas of the burner 151 that passes through between the inner circumference of the heating portion 326 and the outer circumference of the radiation portion 327 is circulated helically around the center axis. Thus, the radiation portion 327 and the heating portion 326 can be heated at enhanced efficiency, and an efficient reforming treatment can be easily obtained.

(15) The turbulence portion 327C helically protrudes from the outer circumference of the radiation portion 327 toward the inner circumference of the heating portion 326.
Accordingly, by, for instance, simply helically winding an elongated steel product around the outer circumference of the radiation portion 327, helical circulation of the combustion gas can be easily provided, and an efficient reforming treatment can be obtained with a simplified arrangement.

(16) According to the second exemplary embodiment, the radiation portion 327 is peripherally widened at its second end opposite to the first axial end closed by the closure plate 327A.
Accordingly, the combustion gas of the burner 151 can smoothly flow into the inner circumferential side of the radiation portion 327, and the radiation portion 327 can be efficiently heated.

### [Third Exemplary Embodiment]

A third exemplary embodiment of a fuel cell system according to the invention will be described below.
In this third exemplary embodiment, the circulation portion 153 in the first exemplary embodiment is arranged differently. The other arrangements remain the same, so that description thereof will be simplified or omitted.

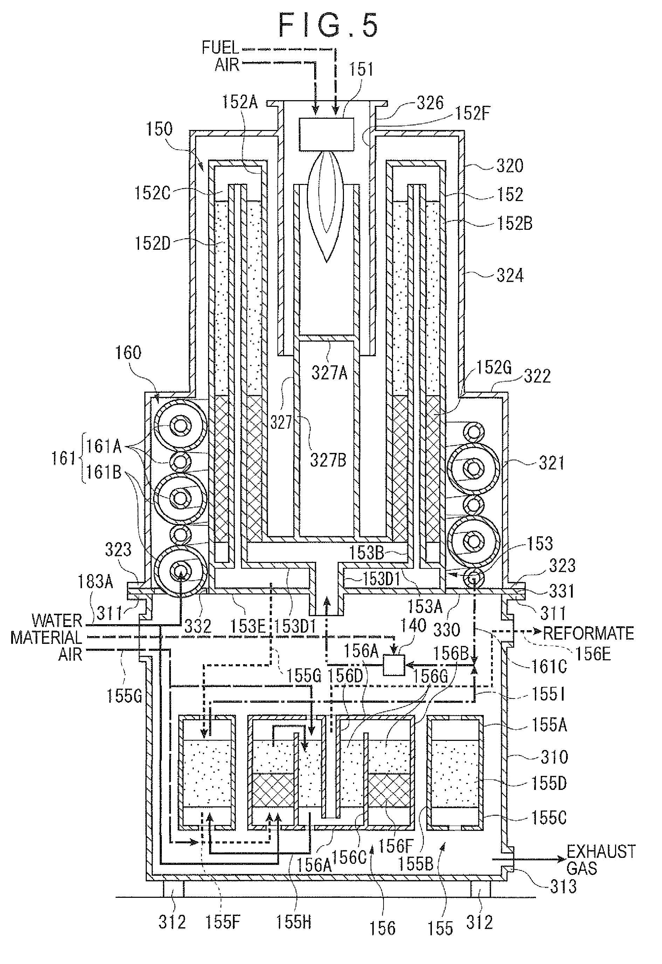

Fig. 5 is a conceptual diagram schematically showing an arrangement of a reformer unit according to the third exemplary embodiment.

In Fig. 5, the reformers container 152 of the reformer 150, which includes the inner cylindrical body 152A and the outer cylindrical body 152B having different diameters but the substantially coincident center axes, is shaped in a substantially annular cylinder in which the reforming chamber 152C of a substantially annular space is defined between the inner cylindrical body 152A and the outer cylindrical body 152B. As in the first exemplary embodiment, the reformer container 152 is not limitedly structured to include the simply cylindrical inner cylindrical body 152A and outer cylindrical body 152B, but may be structured to include, for instance, square tube or circumferentially wavy inner cylindrical body 152A and outer cylindrical body 152B. In short, the inner cylindrical body 152A and outer cylindrical body 152B may be of any shape as long as a substantially annularly cylindrical inner space is defined.
Within the reformer container 152, the reforming catalyst layer 152D is defined by breathable reformer partitions (not shown) with the reforming catalyst being filled in an upper end portion (first axial end portion) of the reformer container 152 while a reforming-filler layer 152G is defined by the breathable reformer partitions with a filler being filled in a lower end portion (second axial end portion) of the reformer container 152. As in the first exemplary embodiment, the reformer partitions are not limited to netted members, but may be any other members. For instance, the reformer partitions may be filled with alumina grains. The lower end (one axial end) of the substantially cylindrical reformer container 152 is integrally provided with the circulation portion 153.

The circulation portion 153 includes: a feed pipe 153A that also serve as the material-gas feeder 153D for feeding the material gas to the reformer container 152; and a plurality of return pipes 153B coaxially fitted into the feed pipe 153A. The circulation portion 153 is connected to the lower end (one axial end) of the reformer container 152.
Like the inflow space 152E of the first exemplary embodiment, the feed pipe 153A is shaped in a substantially circular cylinder in which a feed chamber of a substantially columnar space is defined, with which the reformer container 152 is shaped in a bottom-having annular cylinder. A heating chamber 152F is provided adjacent to the inner circumference of the feed pipe 153A. Substantially at the center of an upper end (first axial end) of the feed pipe 153A, the radiant potion 327 is mounted and fixed. The radiation portion 327, which is provided by coaxially integrating the lower end of the radiation portion 327 of the first exemplary embodiment with the cylindrical leg 327B of the same diameter, is disposed coaxially with the heating portion 326 with the cylindrical leg 327B being mounted on the end surface of the feed pipe 153A. Substantially the center of a lower end surface (axial end) of the feed pipe 153A is provided with the material inflow portion 153D1 into which the material gas flows.
As in the first exemplary embodiment, the first axial ends of the return pipes 153B penetrate the reforming-catalyst layer 152D to be open in the vicinity of the upper end (first axial end) of the reforming chamber 152C for the reformate to flow thereinto, while their second axial ends penetrate the feed pipes 153A to be connected to the reformate outflow portion 153E. Like the reformate outflow portion 153E of the first exemplary embodiment continuously integrated with the material gas feeder 153D, the reformate outflow portion 153E of this exemplary embodiment is continuously integrated with the feed pipe 153A having the same diameter.

### [Advantage(s) of Fuel Cell System]

(17) As described above, the reformer, 150 of the third exemplary embodiment includes the reformer container 152 in which the reforming chamber 152C of a substantially annular space is defined between: the inner cylindrical body 152A in which the burner 151 is positioned substantially on the center axis; and the outer cylindrical body 152B having a different diameter from the inner cylindrical body 152A and disposed substantially coaxially with the inner cylindrical body 152A. The reforming chamber 152C includes the reforming-catalyst layer 152D filled with the reforming catalyst and the reforming-filler layer 152G filled with the filler. In addition, the feed pipe 153A for feeding the material gas containing the liquid fuel (hydrocarbon material) mixed with steam and vaporized by the carburetor 140 to the first axial end (i.e., end adjacent to the reforming-filler layer 152G) of the reforming chamber 152C of the reformer container 152 are connected to the first axial end of the reformer container 152, and the plurality of return pipes 153B fitted into the feed pipe 153A are disposed such that their first ends penetrate and open in the reforming chamber 152C so as to allow the reformate generated in the vicinity of the second axial end of the reforming chamber 152C to flow thereinto. The circulation portion 153 is provided by the feed pipe 153A and the plurality of return pipes 153B.
With this arrangement, in feeding the fuel cell with the reformate for use therein as hydrogen gas, a space necessary for filling the reforming catalyst in an amount corresponding to the desired amount of the reformate can be comparatively easily secured. Thus, it is only required to fill the reforming catalyst and the filler in the substantially annular space, thereby enhancing the workability. In addition, the feed pipe 153A for feeding the material gas to the reforming chamber 152C and the return pipes 153B for circulating and collecting the reformate generated by the reforming catalyst in the reforming chamber 152C provide the circulation portion 153 in which the plurality of return pipes 153B are fitted into the feed pipe 153A. Thus, the structure for feeding the material gas and the structure for collecting the reformate are collectively arranged on a first side of the reformer container, so that these structures cause less interference with the heat insulator or other structures of the reformer container. Accordingly, structural downsizing can be easily realized. Further, by filling the filler into the reforming chamber 152, the reformer container 152 simply arranged to have a substantially annular space can efficiently enhance efficiency of a heat exchange with the reformate circulated in the return pipes 153B. Thus, enhancement of manufacturability can be easily realized with a simplified structure, and an arrangement for efficiently conducting a reforming treatment can be easily obtained. Further, the material gas fed by the feed pipe 153A is heated by the reformate heated up to a predetermined temperature during its generation when the reformate is circulated through the return pipes 153B fitted into the feed pipe 153A, thereby contributing to favorable heat efficiency.

(18) The feed pipe 153A connected to the first axial end of the reformer container 152 is shaped substantially in a cylinder in which a feed chamber of a substantially columnar space is defined. In addition, the second ends of the return pipes 153B, of which first ends are opened in the vicinity of the second end of the reforming chamber 152C, penetrate the feed pipe 153A to be connected to the reformate outflow portion 153E adjoining to the feed pipe 153A and internally having a substantially columnar space into which the reformate flows.
Accordingly, in feeding the material gas into the reforming chamber 152C through the feed pipe 153A and collecting the reformate reformed and generated by the reforming-catalyst layer 152D in the reforming chamber 152C, the material gas and the reformate can be substantially uniformly circulated without drifting, and the filled reforming catalyst can be evenly used for a reforming treatment. Additionally, a heat exchange between the material gas and the reformate can be conducted at enhanced efficiency. Thus, the reforming treatment can be efficiently and favorably conducted.

(19) The feed pipe 153A shaped in a cylinder having substantially the same diameter as the outer cylindrical body 152B of the reformer container 152 and continuously integrated with the outer cylindrical body 152B is also continuously integrated with the reformate outflow portion 153E connected with the return pipes 153B through the feed pipe 153A and shaped in a cylinder having substantially the same diameter as the feed pipe 153A.
Since the substantially cylindrical outer cylindrical body 152B of the reformer container 152, the cylindrical feed pipe 153A having a substantially columnar space and the reformate outflow portion 153E to which the return pipes 153B are connected are continuously integrated, the outer cylindrical body 152B, the feed pipe 153A and the reformate outflow portion 153E are continuously formable, for instance, by axially partitioning a tubular member. Thus, simplification of the structure and enhancement of manufacturability can be easily realized. Further, a system configuration with other members can be facilitated, which also facilitates a downsizing of a system configuration.

(20) As in the first exemplary embodiment, the unit configuration as the reformer unit 300 can contribute to further enhancement of heat efficiency, thereby providing an efficient and favorable reforming treatment.
Further, since the reformer unit 300 is used in the fuel cell system 100, a small system configuration capable of efficient and stable power generation can be provided, and application to a household use can be facilitated. Thus, expansion of use can be easily realized.

### [Fourth Exemplary Embodiment]

A fourth exemplary embodiment of a fuel cell system according to the invention will be described below.
In this fourth exemplary embodiment, description duplicated in the third exemplary embodiment will be simplified or omitted.
Fig. 5 is a conceptual diagram schematically showing an arrangement the reformer unit according to the fourth exemplary embodiment.

The circulation portion 153 of the fourth exemplary embodiment includes: a feed pipe 153A that also serve as the material-gas feeder 153D for feeding the material gas to the reformer container 152; and a plurality of return pipes 153B coaxially fitted into the feed pipe 153A. The circulation portion 153 is connected to the lower end (one axial end) of the reformer container 152.
Like the inflow space 152E of the second exemplary embodiment, the feed pipe 153A is shaped in a substantially circular cylinder in which a feed chamber of a substantially columnar space is defined, with which the reformer container 152 is shaped in a bottom-having annular cylinder. A heating chamber 152F is provided adjacent to the inner circumference of the feed pipe 153A. The radiant potion 327 closed by the closure plate 327A and provided with the turbulence portion 327C (not shown) as in the second exemplary embodiment is mounted and fixed substantially at the center of the upper end (first axial end) of the feed pipe 153A. The radiation portion 327, which is provided by coaxially integrating the lower end of the radiation portion 327 of the second exemplary embodiment with the cylindrical leg 327B of the same diameter, is disposed coaxially with the heating portion 326 with the cylindrical leg 327B being mounted on the end surface of the feed pipe 153A. Substantially the center of a lower end surface (axial end) of the feed pipe 153A is provided with the material inflow portion 153D1 into which the material gas flows.
As in the first exemplary embodiment, the first axial ends of the return pipes 153B penetrate the reforming-catalyst layer 152D to be open in the vicinity of the upper end (first axial end) of the reforming chamber 152C for the reformate to flow thereinto, while their second axial ends penetrate the feed pipe 153A to be connected to the reformate outflow portion 153E. Like the reformate outflow portion 153E of the second exemplary embodiment continuously integrated with the material gas feeder 153D, the reformate outflow portion 153E of this exemplary embodiment is continuously integrated with the feed pipe 153A having the same diameter.

### [Advantage(s) of Fuel Cell System]

The fourth exemplary embodiment provides the same advantages (17) to (20) as the third exemplary embodiment.

### [Fifth Exemplary Embodiment]

A fifth exemplary embodiment of a fuel cell system according to the invention will be described below.
In this fifth exemplary embodiment, the burner 151 in the second exemplary embodiment is disposed such that the combustion gas flows upwardly. The other arrangements remain the same, so that description thereof will be simplified or omitted.

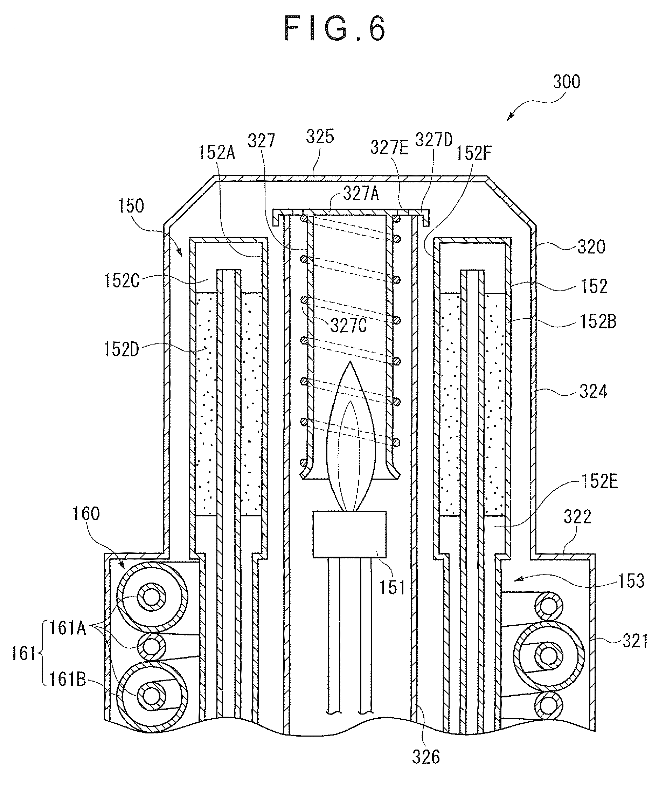

Fig. 6 is a conceptual diagram schematically showing an arrangement in the vicinity of a reformer of a reformer unit according to the fifth exemplary embodiment.

In Fig. 6, the top plate 325 closes an upper end (first axial end) of the small diameter portion 324 of the upper case 320 for the reformer 150. In the reformer container 152 disposed within the small diameter portion 324, the lower end of the reforming chamber 152C is not filled with the reforming-catalyst layer 152D but is provided with the inflow space 152E of a substantially annular space.
The substantially cylindrical heating portion 326 mounted with the burner 151 is positioned in the heating chamber 152F located adjacent to the inner circumference of the reformer container 152, and disposed substantially coaxially with the reformer container 152. The heating portion 326 has, for instance, its lower end mounted and fixed on the material-gas feeder 153D that has a substantially columnar space connected with the feed pipe 153A of the circulation portion 153 of the second exemplary embodiment. Within the heating portion 326, the burner 151 is disposed at a position substantially corresponding to the lower end of the reforming chamber 152C so that the combustion gas of the burner 151 flows substantially outwardly.

The radiation portion 327 is disposed adjacent to the inner circumference of the heating portion 326.
As in the second exemplary embodiment, the radiation portion 327 is shaped in a bottom-having cylinder of which first axial end is closed by the closure plate 327A while its second axial end is peripherally widened, and provided with the turbulence portion 327C on its outer circumference.
At the first end of the radiation portion 327, a support 327D that outwardly protrudes to define a flange shape is integrated with the closure plate 327A. The support 327D is mounted on the upper end (first axial end) of the heating portion 326, and shaped in a flange so that the radiation portion 327 is supported within the heating portion 326 in a manner suspended from the heating portion 326.
A plurality of air vents 327E are circumferentially vented in a periphery of the support 327D. The air vents 327E are provided so that the combustion gas of the burner 51 circulated upwardly between the outer circumference of the radiation portion 327 and the inner circumference of the heating portion 326 when the radiation portion 327 is suspended from the heating portion 326 can pass into an area above the closure plate 327A.
The support 327D is not necessarily of a flange shape but may be, for instance, of such a shape that a plurality of members radially protrude while allowing the combustion gas to be circulatable therebetween.

In heating the reformer 150, the combustion gas of the burner 151 passes through between the outer circumference of the radiation portion 327 and the inner circumference of the heating portion 326 upwardly from the widened lower end while heating the radiation portion 327 by flowing into the inner circumferential side of the opposed radiation portion 327. At the time of this passage, the combustion gas flows therethrough helically around the center axis of the reformer container 150 due to the turbulence portion 327C. The passage of the combustion gas heats the radiation portion 327 and the heating portion 326. The combustion gas is circulated through the air vents 327E of the support 327D to reach the upper side of the small diameter portion 324, and downwardly passes through the outer circumferential side and inner circumferential side of the reformer container 152 to flow into the large diameter portion 321.

### [Advantage(s) of Fuel Cell System]

(21) As described above, as far as employing the same arrangements as the second exemplary embodiment and the fourth exemplary arrangement, the reformer 150 of the fifth exemplary embodiment can provide the same advantages as these exemplary embodiments.
According to the fifth exemplary embodiment, in the reformer container 152 disposed such that its center axis extends substantially in the vertical direction, the burner 151 is disposed such that the fuel gas flows substantially upwardly in the vertical direction, and the radiation portion 327 is disposed to downwardly open (i.e., disposed such that its first end closed by the closure plate 327A is located upward in the axial direction).
With this arrangement, by mounting the radiation portion 327 on the end of the heating portion 326 (e.g., locking or coupling the end of the radiation portion 327 to the end of the heating portion 326), the radiation portion 327 can be easily disposed. Thus, structural simplification and enhancement of manufacturability can be easily realized.

(22) According to the fifth exemplary embodiment, the outwardly-protruding support 327D provided at the first axial end of the radiation portion 327 closed by the closure plate 327A is supported on the end of the heating portion 26 in such a manner that the radiation portion 327 is suspended from the end of the heating portion 326.
With this arrangement, the support 327D simply structured to outwardly protrude can support the radiation portion 327 within the heating portion 326. Thus, structural simplification, enhancement of manufacturability and downsizing can be easily realized.
Particularly, since the flange-shaped support 327D is continuously provided on the closure plate 327A, the support 327D can be provided by only sizing the closure plate 327A to be diametrically larger than the diameter of the radiation portion 327 by the dimension of the support 327D and mounting such a closure plate 327A to the radiation portion 327 in forming the radiation portion 327 closed by the closure plate 327A. Thus, manufacturability can be enhanced. Further, an enhanced support force can be obtained, so that the radiation portion 327 can be stably supported in a suspensory manner.

(23) As in the second exemplary embodiment, the radiation portion 327 is peripherally widened at its lower end.
With this arrangement, since the burner 151 is disposed such that the combustion gas is circulated substantially upwardly in the vertical direction, condensation at the time of shutdown and the like can be prevented from dripping into the burner 151. Thus, by simply widening the periphery of the radiation portion 327, protection of the burner 151 and stable combustion can be easily realized.

(24) The heating portion 326 on which the burner 51 is to be mounted is mounted and fixed on the material-gas feeder 153D.
With this arrangement, the material-gas feeder 153D simply structured to have a substantially columnar space for circulating the material gas into the reforming-catalyst layer 152D without drifting can be used for disposing the heating portion 326. Thus, further structural simplification and further enhancement of manufacturability can be easily realized.

### [Modification(s) of Embodiment(s)]

The above-described aspect(s) is merely an exemplary aspect of the invention, and the invention is not limited to the above-described exemplary embodiment(s). Not to mention, any modification or improvement compatible with an object and advantage of the invention are within a scope of the invention. The specific structure, shape and the like for implementing the invention may be altered to another structure and the like as long as such an alternation is compatible with an object and advantage of the invention.

Specifically, while the reformer 150 is exemplarily used in the fuel cell system 100 as described above, the reformer 150 according to the aspect of the invention may be applied as a hydrogen-gas manufacturing apparatus for use in the fuel cell system 100.
The reformer 150 is not necessarily configured as a unit but may be configured for its single use. The unit configuration does not necessarily include all of the heat exchanger 160, the carburetor 140, the CO transformer unit 155 and the CO selective-oxidation unit 156 as described in the exemplary embodiment(s), but may include at least one combination of the above or may further include the desulfurization unit 130.

The reformer 150 may adopt an arrangement where the burner 151 is disposed to downwardly eject the combustion gas, an arrangement where the burner 151 is disposed to upwardly eject the combustion gas or an arrangement where the burner 151 is disposed to substantially horizontally eject the combustion gas.
The burner 151 is not necessarily singularly provided but a plurality of burners 151 may be provided.
The heater for reforming is not limited to the burner 151 but may be any other heating system such as an electric heater.

In the double-pipe portions 153C of the circulation portion 153 of the first and second exemplary embodiments, for instance, a filler may be filled between the feed pipes 153A and the return pipes 153B. Examples of the filler are various corrosion-resistant or heat-resistant members such as metals (e.g., wool-type stainless steel) and inorganic materials (e.g., alumina grains).
With the arrangement for filling such a filler, a heat exchange between the material gas circulated through the feed pipes and the reformate circulated through the return pipes can be conducted at enhanced efficiency, thereby contributing to more favorable heat efficiency.

While the inflow space 152E of the first and second exemplary embodiments is shaped in a substantially circular cylinder having a substantially columnar space, as in the fifth exemplary embodiment, the inflow space 152E may be continuously provided on the end of the reformer container 152 while being shaped in a substantially annular cylinder filled with no reforming catalyst.
On the other hand, in the second and fourth exemplary embodiments, the inflow space 152E shaped in a substantially annular cylinder or a substantially circular cylinder may be provided on one axial end of the reforming-filler layer 152G so as to provide a hollow space.

The return pipes 153B of the first to fifth exemplary embodiments may be helical in the circumferential direction of the reforming-catalyst layer 152D within the reforming-catalyst layer 152D.
With this arrangement, a heat exchange between the reformate circulated through the return pipes and the reforming catalyst can be conducted at enhanced efficiency, thereby contributing to an efficient and favorable reforming treatment.
The return pipes 153B may be helical in the axis direction of the reformer container 152 (i.e., the longitudinal direction of the return pipes 153B). Alternatively, the return pipes 153B may be helical in the circumferential direction of the reforming-catalyst layer 152D and the longitudinal direction of the return pipes 153B.

In the exemplary embodiments, the double-pipe circulation portion 153 may not be used for feeding the material gas to the reformer container 152 and collecting the reformate from the reformer container 152. Instead, any arrangement is usable as long as the material gas is fed from the first axial end of the reformer container 152 while the reformate gas is collected from the second axial end thereof.

While the radiation portion 327 is peripherally widened at its open end, the radiation portion 327 may not be widened.
The turbulence portion 327C in the second, fourth and fifth exemplary embodiments may not be provided. While the turbulence portion 327C is provided on the outer circumference of the radiation portion 327, the turbulence portion 327C may be provided on, for instance, the inner circumference of the heating portion 326 or between the outer circumference of the radiation portion 327 and the inner circumference of the heating portion 326. In Fig. 3 of the second exemplary embodiment and Fig. 6 of the fifth exemplary embodiment, the turbulence portion 327C is exemplarily out of contact with the inner circumference of the heating portion 326, but may be in contact therewith.

While the support 327D of the radiation portion 327 of the fifth exemplary embodiment is supported on the end of the heating portion 326 such that the radiation portion 327 is suspended from the end of the heating portion 326, the arrangement for disposing the radiation portion 327 is not limited thereto.
For instance, in the fifth embodiment, the widened lower end periphery of the radiation portion 327 may be connected to the inner circumference of the heating portion 326. In addition, the air vents 327E may be provided on the widened periphery circumferentially so as to be breathable. Then, the periphery may serve as the support.
While the cylindrical leg 327B serves as the mounting portion in the second exemplary embodiment, the widened upper end periphery thereof may be likewise connected to the inner circumference of the heating portion 326, or may be configured to be suspensible from the end the heating portion 326. In addition, the air vents 327E may be provided on the widened periphery circumferentially so as to be breathable. Then, the periphery may serve as the support, so that the cylindrical leg 327B may not be provided.

The specific structure, shape and the like for implementing the invention may be altered to another structure and the like as long as such an alternation is compatible with an object of the invention.

### Industrial Applicability

The present invention is applicable to a reforming treatment for generating a reformate containing hydrogen gas by heating a material gas containing a hydrocarbon material such as liquid fuel (e.g., kerosene) and hydrocarbon material gas (e.g., liquefied petroleum gas) with a burner with the presence of a reforming catalyst. The invention is particularly applicable to a reformer in a fuel cell system.

## Claims

1. A reformer that generates a reformate containing a hydrogen gas by heating a material gas containing a hydrocarbon material with a presence of a reforming catalyst, the reformer comprising:
a reformer container comprising: an inner cylindrical body and an outer cylindrical body respectively having different diameters and being substantially coaxial with each other; and a reforming chamber defined between the inner cylindrical body and the outer cylindrical body, the reforming chamber having a substantially annular space filled with the reforming catalyst;
a heater disposed substantially on a center axis of the inner cylindrical body of the reformer container; and
a circulation portion having a plurality of double-pipe structures each of which comprises: a feed pipe connected to a first axial end of the reformer container for feeding the material gas to a first axial end of the reforming chamber; and a return pipe substantially coaxially fitted into the feed pipe such that its first end penetrates the reforming chamber and opens in a vicinity of a second axial end within the reforming chamber so as to allow the reformate generated by preforming the material gas to flow thereinto.

2. The reformer according to claim 1, wherein a filler is filled between the feed pipe and the return pipe in the circulation portion in such a manner that the material gas is circulatable.

3. The reformer according to claim 1 or 2, wherein
the feed pipe is connected to the first axial end of the reformer container at its first end while being connected to a material-gas feeder at its second end, the material-gas feeder internally having a substantially columnar space into which the material gas flows, and
the return pipe penetrates the material-gas feeder to be connected to a reformate outflow portion at its second end, the reformate outflow portion being adjoined to the material-gas feeder and internally having a substantially columnar space into which the reformate flows.

4. The reformer according to claim 3, wherein the material-gas feeder and the reformate outflow portion are shaped substantially in a cylinder having substantially a same diameter and continuously integrated with each other.

5. The reformer according to any one of claims 1 to 4, wherein the reformer container further comprises an inflow space of a substantially annular space filled with no reforming catalyst, the inflow space being provided at the first axial end connected with the feed pipe of the circulation portion.

6. The reformer according to any one of claims 1 to 4, wherein the reformer container further comprises an inflow space of a substantially columnar space filled with no reforming catalyst, the inflow space being provided at the first axial end connected with the feed pipe of the circulation portion.

7. A reformer that generates a reformate containing a hydrogen gas by heating a material gas containing a hydrocarbon material with a presence of a reforming catalyst, the reformer comprising:
a reformer container comprising: an inner cylindrical body and an outer cylindrical body respectively having different diameters and being substantially coaxial with each other; and a reforming chamber defined between the inner cylindrical body and the outer cylindrical body, the reforming chamber having a substantially annular space filled with a filler adjacently to its first axial end while being filled with the reforming catalyst adjacently to its second axial end;
a heater disposed substantially on a center axis of the inner cylindrical body of the reformer container; and
a circulation portion comprising: a feed pipe connected to a first axial end of the reformer container for feeding the material gas to a first axial end of the reforming chamber; and a plurality of return pipes fitted into the feed pipe such that their first ends penetrate the reforming chamber and open in a vicinity of a second axial end within the reforming chamber so as to allow the reformate generated by reforming the material gas to flow thereinto.

8. The reformer according to claim 7, wherein
the feed pipe is shaped in a cylinder in which a feed chamber of a substantially columnar space is defined, and
the return pipes penetrate the feed pipe to be connected to a reformate outflow portion at its second end, the reformate outflow portion being adjoined to the feed pipe and internally having a substantially columnar space into which the reformate flows.

9. The reformer according to claim 8, wherein
the feed pipe is shaped in a cylinder having substantially a same diameter as the outer cylindrical body of the reformer container and continuously integrated with the outer cylindrical body, and
the reformate outflow portion is shaped in a cylinder having substantially a same diameter as the feed pipe and continuously integrated with the feed pipe.

10. The reformer according to any one of claims 1 to 9, wherein the return pipe is helical in a region filled with the reforming catalyst within the reforming chamber of the reformer container.

11. A reformer that generates a reformate containing a hydrogen gas by heating a material gas containing a hydrocarbon material with a presence of a reforming catalyst, the reformer comprising:
a reformer container comprising: an inner cylindrical body and an outer cylindrical body respectively having different diameters and being substantially coaxial with each other; and a reforming chamber defined between the inner cylindrical body and the outer cylindrical body, the reforming chamber having a substantially annular space filled with the reforming catalyst;
a radiation pipe shaped in a cylinder having a smaller diameter than the inner cylindrical body of the reformer container, the radiation pipe being disposed adjacent to an inner circumference of the inner cylindrical body substantially coaxially with the inner cylindrical body;
a heater disposed within the radiation pipe and feeding a heating gas to a first axial end of the reforming chamber; and
a rectifier pipe shaped in a cylinder having a smaller diameter than the radiation pipe, a first axial end of the cylinder opposed to the heater being at least partially closed by a closure plate so as to at least partially block the heating gas of the heater, the rectifier pipe being disposed adjacent to an inner circumference of the radiation pipe substantially coaxially with the radiation pipe so that the heating gas of the heater is circulatable between its outer circumference and the inner circumference of the radiation pipe, the radiation pipe being heated by the heater.

12. The reformer according to claim 11, wherein
the reformer container is disposed such that its center axis extends substantially along a vertical direction,
the heater is disposed such that the heating gas flows substantially downwardly in the vertical direction, and
the rectifier pipe is disposed to upwardly open.

13. The reformer according to claim 11, wherein
the reformer container is disposed such that its center axis extends substantially along a vertical direction,
the heater is disposed such that the heating gas flows substantially upwardly in the vertical direction, and
the rectifier pipe is disposed to downwardly open.

14. The reformer according to claim 13, wherein the rectifier pipe comprises a support protruding outwardly from the first axial end closed by the closure plate, the support being supported on an end of the radiation pipe in a manner suspended from the end of the radiation pipe.

15. The reformer according to any one of claims 11 to 14, wherein
the reformer container is fed with the material gas so that the material gas is circulated substantially along an axis direction of the reformer container within the reforming chamber to output the reformate, and
the rectifier pipe is disposed at a position not opposed to a portion of the inner cylindrical body of the reformer container, the portion of the inner cylindrical body corresponding to an upstream side of a direction in which the material gas is circulated within the reforming chamber.

16. The reformer according to any one of claims 11 to 15, further comprising a circulation portion having a plurality of double-pipe structures each of which comprises: a feed pipe connected to a first axial end of the reformers container for feeding the material gas to a first axial end of the reforming chamber; a return pipe substantially coaxially fitted into the feed pipe such that its first end penetrates the reforming chamber and opens in a vicinity of a second axial end within the reforming chamber so as to allow the reformate generated by reforming the material gas to flow thereinto.

17. The reformer according to claim 12, further comprising
a circulation portion having a plurality of double-pipe structures each of which comprises: a feed pipe connected to a first axial end of the reformer container for feeding the material gas to a first axial end of the reforming chamber; a return pipe substantially coaxially fitted into the feed pipe such that its first end penetrates the reforming chamber and opens in a vicinity of a second axial end within the reforming chamber so as to allow the reformate generated by reforming the material gas to flow thereinto, wherein
the reformer container further comprises an inflow space of a substantially columnar space filled with no reforming catalyst, the inflow space being provided at the first axial end connected with the feed pipe of the circulation portion, and
the rectifier pipe comprises a mounting portion for mounting the rectifier pipe on the inflow space such that the rectifier pipe is upwardly open.

18. The reformer according to any one of claims 11 to 17, further comprising a turbulence portion disposed helically around a center axis between the inner circumference of the radiation pipe and the outer circumference of the rectifier pipe.

19. The reformer according to claim 18, wherein the turbulence portion is helically provided on the outer circumference of the rectifier pipe to protrude toward the inner circumference of the radiation pipe.

20. The reformer according to any one of claims 11 to 19, wherein the rectifier pipe is peripherally widened at its second end opposite to the first axial end closed by the closure plate.

21. A reformer unit, comprising:
the reformer according to any one of claims 1 to 20;
a steam generator that generates the steam from fed water with heating by the heater of the reformer; and
a steam mixer that mixes steam into a desulfurized liquid fuel or a hydrocarbon-material gas and generates the material gas containing the hydrocarbon material.

22. The reformer unit according to claim 21, further comprising:
a CO transformer fed with the reformate generated by the reformer and filled with a CO-transforming catalyst for transforming carbon monoxide (CO) contained in the reformate into carbon dioxide (CO₂); and
a CO remover fed with the reformate processed by the CO transformer for removing CO residual in the reformate.

23. The reformer unit according to claim 22, wherein
at least either one of the CO transformer and the CO remover is substantially annular while the other one of the CO transformer and the CO remover is disposed adjacent to an inner circumference of the at least either one of the CO transformer and the CO remover such that its axis direction extends along a substantially vertical direction, and
the reformer is located upwardly in the vertical direction relative to the CO transformer and the CO remover and disposed such that an axis direction of the reformer container extends along the substantially vertical direction.

24. The reformer unit according to claim 22 or 23, wherein the steam generator comprises a water pipe piped within at least one of the CO transformer and the CO remover, the water pipe being a pipe in which fed water is circulated.

25. The reformer unit according to any one of claims 21 to 24, wherein the steam generator comprises a water-circulating pipe piped at a position adjacent to an outer circumference of the circulation portion of the reformer, the water-circulating pipe being a pipe in which fed water is circulated.

26. A fuel cell system, comprising:
the reformer according to any one of claims 1 to 20 or the reformer unit according to any one of claims 21 to 25;
an oxygen-containing gas feeder that feeds an oxygen-containing gas; and
a fuel cell that generates power using the reformate generated by the reformer unit and the oxygen-containing gas fed by the oxygen-containing gas feeder.
